(19) Europäisches Patentamt
European Patent Office
Office européen des brevets

(11) **EP 4 451 779 A1**

(12) **EUROPEAN PATENT APPLICATION**
published in accordance with Art. 153(4) EPC

(43) Date of publication:
**23.10.2024 Bulletin 2024/43**

(21) Application number: **22914827.5**

(22) Date of filing: **27.12.2022**

(51) International Patent Classification (IPC):
**H04W 72/12** *(2023.01)* **H04W 72/04** *(2023.01)*
**H04L 5/00** *(2006.01)*

(52) Cooperative Patent Classification (CPC):
**H04L 5/00; H04W 72/04; H04W 72/0446;**
**H04W 72/0453; H04W 72/12; H04W 72/1263;**
**H04W 72/542**

(86) International application number:
**PCT/CN2022/142517**

(87) International publication number:
**WO 2023/125575 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 CN 202111623340**

(71) Applicant: **ZTE Corporation**
**Shenzhen, Guangdong 518057 (CN)**

(72) Inventors:
• **CHENG, Xudong**
  **Shenzhen, Guangdong 518057 (CN)**
• **CHEN, Xianming**
  **Shenzhen, Guangdong 518057 (CN)**
• **AI, Xingxing**
  **Shenzhen, Guangdong 518057 (CN)**

(74) Representative: **Zoli, Filippo**
**Brunacci & Partners S.r.l.**
**Via Pietro Giardini, 625**
**41125 Modena (IT)**

(54) **COMMUNICATION METHOD, NETWORK DEVICE AND STORAGE MEDIUM**

(57) Disclosed are a communication method, a network device, and a storage medium. A first user equipment receives a first reference signal sent by a second user equipment and a second reference signal sent by a first base station device, obtains a first signal strength measurement value (S 110) and a second signal strength measurement value (S120) according to the first reference signal and the second reference signal respectively, and sends measurement information obtained from the first signal strength measurement value and the second signal strength measurement value to the first user equipment for scheduling control; and the first base station device obtains a signal-to-interference-plus-noise ratio between the first user equipment and the second user equipment according to the measurement information, and obtains a scheduling instruction according to the signal-to-interference-plus-noise ratio, so as to determine whether the first user equipment and the second user equipment communicate under the same time-frequency resource (S130).

```
Receive a first reference signal sent by a second UE,
and acquire a first signal strength measurement value     S110
according to the first reference signal

Receive a second reference signal sent by a first base
station equipment, and acquire a second signal            S120
strength measurement value according to the second
reference signal

Acquire measurement information according to the
first signal strength measurement value and the
second signal strength measurement value, and the
measurement information is sent to the first base         S130
station equipment, such that the first base station
equipment obtains a SINR through the measurement
information, and generates a scheduling command
according to the SINR; the scheduling command is
utilized to determine whether the each of first UE
and the second UE performs respective communicate
over the same time-frequency resource

Receive the scheduling command sent by the first
base station equipment, and Perform communication        S140
according to the scheduling command
```

FIG. 1

**Description**

**CROSS-REFERENCE TO RELATED APPLICATION**

This application is filed on the basis of the Chinese patent application No. 202111623340.6 filed December 28, 2021, and claims priority of the Chinese patent application, the entire contents of which are incorporated herein by reference.

**TECHNICAL FIELD**

The present disclosure relates to the field of communication, and in particular to a method for communication, a network device, and a storage medium.

**BACKGROUND**

With the commercialization of the 5th-Generation (5G) mobile communication technology, the number of wireless user terminals is increasing. The demand for wireless communication services is increasing. The problem of lack of spectrum resources is becoming increasingly prominent. However, the existing spectrum resources used for wireless mobile communication are already in short supply. Thus, it is important to make more efficient use of the existing limited communication spectrum resources in wireless mobile communication. Co-frequency Co-time Full Duplex (CCFD) technology can effectively improve the efficiency of spectrum utilization. However, in the current communication system using CCFD technology, user equipment (UE)s in a cell will interfere with each other, which will reduce the capacity of the full duplex system and thus affect the network performance.

**SUMMARY**

The following is a summary of the subject matter described herein. This summary is not intended to limit the scope of protection of the claims.

Provided are a method for communication, a network device and a storage medium in some embodiments of the present disclosure.

According to an embodiment, a method for communication is provided. The method is applied to a first User Equipment (UE). The method includes: receiving a first reference signal sent by a second UE, and acquiring a first signal strength measurement value according to the first reference signal; receiving a second reference signal sent by a first base station (BS) equipment, and acquiring a second signal strength measurement value according to the second reference signal; acquiring measurement information according to the first signal strength measurement value and the second signal strength measurement value, and sending the measurement information to the first BS equipment, such that the first BS equipment obtains a Signal to Interference plus Noise Ratio (SINR) through the measurement information, and generates a scheduling command according to the SINR; where the scheduling command is utilized to determine whether each of the first UE and the second UE performs respective communication over the same time-frequency resource; and receiving the scheduling command sent by the first BS equipment, and performing communication according to the scheduling command.

According to an embodiment, a method for communication is provided. The method is applied to a first base station (BS) equipment. The method includes: sending a second reference signal to a first User Equipment (UE), such that the first UE acquires a second signal strength measurement value according to the second reference signal; receiving measurement information sent by the first UE; where the measurement information includes a first signal strength measurement value and the second signal strength measurement value; and the first signal strength measurement value is generated by the first UE according to a first reference signal sent by a second UE; acquiring SINR of the first UE in relation to the second UE according to the measurement information, and generating a scheduling command according to the SINR; where the scheduling command is utilized to determine whether each of the first UE and the second UE perform respective communication over a same time-frequency resource; and sending the scheduling command respectively sent to the first UE and the second UE, such that each of the first UE and the second UE performs respective communication according to the scheduling command.

According to an embodiment, a method for communication is provided. The method is applied to a second User Equipment (UE). The method includes: sending a first reference signal to a first UE, such that the first UE acquires a first signal strength measurement value according to the first reference signal; receiving a scheduling command sent by a first Base Station (BS) equipment, and performing communication according to the scheduling command; where the scheduling command is acquired by the first BS equipment according to the SINR of the first UE in relation to the second UE; the scheduling command is utilized for determining whether each of the first UE and the second UE perform respective communication over the same time-frequency resource; the SINR is acquired by the first BS equipment according to the measurement information that includes the first signal strength measurement value and the second signal strength measurement value; and the second signal strength measurement value is acquired by the first UE according to a second reference signal sent by the first BS equipment.

According to an embodiment, a network device is provided. The network device includes a memory, a processor and a computer program stored in the memory and executable by the processor which, when executed by the processor causes the processor to carry out any one of the methods as described above.

According to an embodiment, a computer-readable storage medium is provided. The computer-readable storage medium stores a computer program thereon which, when executed by a processor, causes the processor to carry out any one of the methods as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

## BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.

FIG. 1 depicts a flowchart showing a method for communication according to an embodiment of the present disclosure, the method being applied to a first user equipment (UE);

FIG. 2 depicts a schematic diagram showing a general communication scenario according to an embodiment of the present disclosure;

FIG. 3 depicts a schematic flow diagram showing an acquisition of measurement information by a first UE according to an embodiment of the present disclosure;

FIG. 4 depicts a schematic flow diagram showing an acquisition of a first signal strength measurement value by a first UE according to an embodiment of the present disclosure;

FIG. 5 depicts a schematic diagram showing a communication scenario where spatial division groups are present according to an embodiment of the present disclosure;

FIG. 6 depicts a schematic diagram showing a multi-cell communication scenario according to an embodiment of the present disclosure;

FIG. 7 depicts a flow diagram showing the performing of communication scheduling by the first UE according to an embodiment of the present disclosure;

FIG. 8 depicts a flowchart showing a method for communication according to an embodiment of the present disclosure, the method being applied to a first Base Station (BS) equipment;

FIG. 9 depicts a flowchart showing the acquisition of noise power by a first BS equipment according to an embodiment of the present disclosure;

FIG. 10 depicts a flowchart showing the generation of a scheduling command by a first BS equipment according to an embodiment of the present disclosure;

FIG. 11 depicts a flowchart showing the acquisition of different schedules by a first BS equipment based on a threshold value provided by an embodiment of the present disclosure;

FIG. 12 depicts a flowchart showing the generation of a scheduling command by a first BS equipment based on a first inter-user interference table according to an embodiment of the present disclosure;

FIG. 13 depicts a flowchart showing exchange of interference tables between a plurality of cells according to an embodiment of the present disclosure;

FIG. 14 depicts a flowchart showing communication scheduling when a plurality of users meet pairing condition according to an embodiment of the present disclosure;

FIG. 15 depicts a schematic diagram showing a multi-user communication scenario according to an embodiment of the present disclosure;

FIG. 16 depicts a flowchart showing the generation of a scheduling command by a first BS equipment based on spatial division group according to an embodiment of the present disclosure;

FIG. 17 depicts a flowchart showing a method for communication according to an embodiment of the present disclosure, the method being applied to a second UE;

FIG. 18 depicts a flow diagram showing the performing of communication scheduling by the second UE according to an embodiment of the present disclosure; and

FIG. 19 depicts a schematic diagram showing a network device according to an embodiment of the present disclosure.

## DETAILED DESCRIPTION

The purpose, technical scheme and advantages of the present disclosure will become apparent through the following description for various embodiments in conjunction with the drawings. It should be understood that the embodiments described here are intended for illustration but not limitation of the scope of the present disclosure.

In the description of the present disclosure, it should be understood that the description with respect to the orientations, such as the terms "up", "down", "front", "rear", "left", "right", indicate the orientation or position relationship based on the orientation or position relationship shown in the drawings, and are only for the convenience of describing the present disclosure and simplifying the description, rather than indicating or implying that the device or component referred to must have a specific orientation, be constructed and operated in a specific orientation. And thus, those terms shall not be understood as a limitation to the embodiments of the present disclosure.

It should be understood that in the description of embodiments of the present disclosure, term "several" means more than one, "a plurality" (or "multiple") means more than two; "greater than", "less than", "more than", etc. shall be understood to exclude the number being referred to; and "above", "below", within, etc. shall be understood to include the number being referred to. Terms "first" and "second" if described, are intended for distinguishing technical features, which shall not be understood as indicating or implying relative importance or implicitly indicating the number of the indicated technical features or the order of the indicated technical features.

In the description of various embodiments of the present disclosure, the terms such as provide, mount or connect should be broadly understood, unless otherwise specified, and those having ordinary skills in the art can reasonably determine the specific meanings of the above terms in various embodiments of the present disclosure in conjunction with the specific contents of the technical scheme.

Provided are a method for communication, a network device and a storage medium in some embodiments of the present disclosure. Effective elimination of the interference between users are enabled. Network performance is improved. The method for communication according to an embodiment of the present disclosure is applied to user equipment or a BS equipment in a communication cell. The UE can be simply called a user. The UE can be a communication terminal device such as a mobile phone or a mobile computer. The BS equipment is a device for configuring time-frequency resources between users. It can be understood that, the BS equipment in embodiments of the present disclosure is a BS for telecommunication, which can be referred to as a BS for short, and can include a first BS equipment and a second BS equipment. The BS can configure time-frequency resources for users. Uplink users send uplink information to the BS through uplink channels. The BS sends downlink information to downlink users through downlink channels. The present disclosure does not impose specific limitations on communication cells.

Several embodiments are illustrated below.

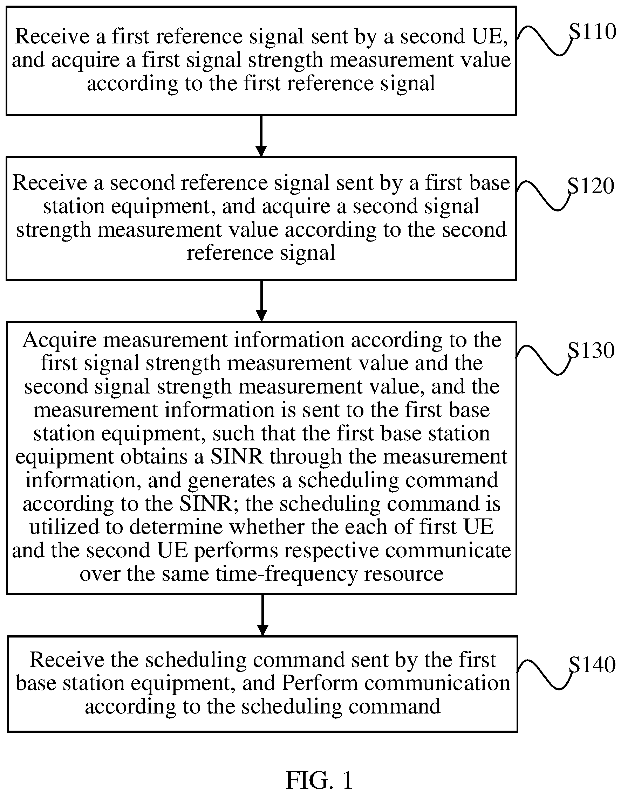

According to an embodiment, a method for communication is provided. The method is applied to a first user equipment (UE). Referring to FIG. 1, the method includes but is not limited to operation S110, operation S120, operation S130 and operation S140.

At operation S 110, a first reference signal sent by a second UE is received, and a first signal strength measurement value is acquired according to the first reference signal.

At operation S 120, a second reference signal sent by a first BS equipment is received, and a second signal strength measurement value is acquired according to the second reference signal.

At operation S 130, measurement information is acquired according to the first signal strength measurement value and the second signal strength measurement value, and the measurement information is sent to the first BS equipment, such that the first BS equipment obtains a Signal to Interference plus Noise Ratio (SINR) through the measurement information, and generates a scheduling command according to the SINR. The scheduling command is utilized to determine whether each of first UE and the second UE performs respective communication over the same time-frequency resource.

At operation S140, the scheduling command sent by the first BS equipment is received, and communication is performed according to the scheduling command.

In an embodiment, the first UE and the second UE can communicate through the first BS equipment. The first UE can receive the first reference signal sent by the second UE and the second reference signal sent by the first BS equipment, and obtain the first signal strength measurement value and the second signal strength measurement value respectively according to the first reference signal and the second reference signal. The UE sends the measurement information obtained from the first signal strength measurement value and the second signal strength measurement value to the first BS equipment for scheduling control. The first BS equipment calculates the signal to interference plus noise ratio (SINR) of the first UE in relation to the second UE according to the measurement information. The first BS equipment acquires a scheduling command according to SINR. The scheduling command can be utilized to determine whether the first UE and the second UE communicate over the same time-frequency resource. The first BS equipment sends the scheduling command to the first UE and the second UE. When it is determined that the first UE and the second UE communicate over the same time-frequency resource, the first UE and the second UE conduct full-duplex communication over the same time-frequency resource in response to the scheduling command. Otherwise, the first and second UEs will not schedule full-duplex communication over the same time-frequency resource.

It should be noted that the first UE and the second UE are downlink user and uplink user camping on a cell respectively. Through the method for communication according to an embodiment of the present disclosure, inter-user interference can be effectively eliminated through user measurement reporting and base station scheduling. Uplink and downlink users with small mutual interference can be scheduled to utilize the same time-frequency resources for full-duplex communication. As such, the SINR of UEs in the cell is greatly improved, and the communication spectrum efficiency is thus significantly improved. The embodiment of the present disclosure is simple to implement, accurate in interference elimination, flexible and simple in configuration, and promotes full-duplex technology application in a system with a cellular cell. In this embodiment, the first UE is a downlink user, and the second UE is an uplink user. Hence, the first reference information is uplink reference information sent by the uplink user and the second reference information is downlink reference information sent by the first BS equipment.

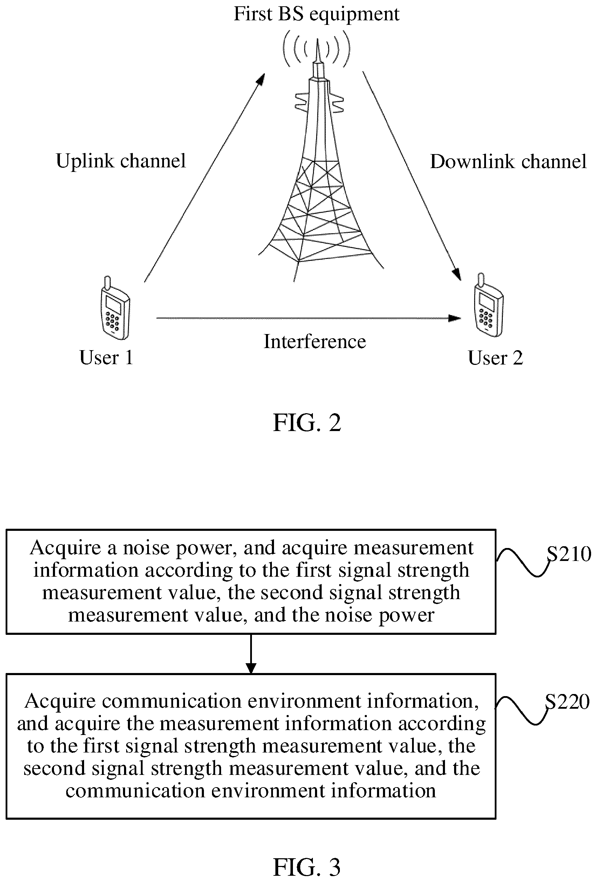

In the communication system employing the CCFD technology, the transmitting signal of full-duplex transmitter will cause strong Self-Interference (SI) to the local receiver. The primary task of employment of full-duplex is to suppress the self-interference, which will directly affect the communication quality of full-duplex system. In some cases, self-interference is effectively suppressed by interference cancellation technologies in domains such as antenna domain, radio frequency domain and digital domain, which makes full-duplex mode possible. Due to the complexity of self-interference cancellation and high hardware requirements, full-duplex transmission is generally not implemented at the user end. Such a simple and effective full-duplex mode is that the BS sends and receives data from two different users at the same time with full-duplex mode while at the user side the traditional half-duplex mode is still implementing. According to the full-duplex transmission scheme shown in FIG. 2, the first BS equipment receives data sent by the user 1 of the uplink user over a certain time-frequency resource, and at the same time, the first BS equipment sends data to the user 2 of the downlink user over the same time-frequency resource. In this way, on the user side, the inter-user interference of uplink transmitting user 1 to downlink receiving user 2 becomes the main problem. In view of this, through the method for communication according to an embodiment of the present disclosure, inter-user interference can be effectively eliminated through user measurement reporting and base station scheduling. Uplink and downlink users with small mutual interference can be scheduled to utilize the same time-frequency resources for full-duplex communication. As such, the SINR of UEs in the cell is greatly improved, and the communication spectrum efficiency is thus significantly improved. The embodiment of the present disclosure is simple to implement, accurate in interference elimination, flexible and simple in configuration.

In an embodiment, the first reference signal is an Uplink Reference Signal (URS) periodically or aperiodically sent by an uplink user. The URS can be employed for interference measurement. The periodicity or aperiodicity of the transmission can be set according to practical communication requirements. It can be understood that, the URS can be Demodulation Reference Signal (DMRS) or Sounding Reference Signal (SRS), or another specially designed reference signal which can be employed to improve the accuracy of interference channel measurement. The sequence and time-frequency position information of all uplink reference signals can be preset or broadcast to all users by the BS. As such, each user also knows the sequence and time-frequency position of the reference signals sent by other UEs. The first signal strength measurement value can be the Reference Signal Receiving Power (RSRP) obtained according to the URS or another measurement value that can reflect the signal strength, such as the Reference Signal Receiving Quality (RSRQ), etc. The embodiments of the present disclosure do not limit the type of the first signal strength measurement value. In an embodiment of the present disclosure the first signal strength measurement value is illustrated as RSRP by way of an example. It can be understood that since the antenna of a UE is not design for separate transmission and reception and the UEs may perform the transmission and/or reception over the same frequency concurrently, the interference between users exhibits some reciprocity in a certain time when interference occurs.

In an embodiment, the second reference signal is a Downlink Reference Signal (DRS) periodically or aperiodically sent by the first BS equipment. The DRS can be employed for interference measurement. The periodicity or aperiodicity of the transmission can be set according to practical communication requirements. It can be understood that, the DRS can be a Channel State Information Reference Signal (CSI-RS), or another specially designed reference signal. The second reference signal is utilized for users to measure the expected signal of the BS, which can be utilized to improve the accuracy of interference channel measurement. The sequence and time-frequency position information of all downlink reference signals are also preset or broadcasted by the BS to all users. The second signal strength measurement value can be RSRP or RSRQ obtained according to the DRS, and the type of the second signal strength measurement value is not limited in the present disclosure. The second signal strength measurement value is illustrated as RSRP in an embodiment of the present disclosure.

As shown in FIG. 3, in an embodiment, S130 as discussed above may include, but is not limited to, the following operations S210 and S220.

At operation S210, a noise power is acquired, and measurement information is acquired according to the first signal strength measurement value, the second signal strength measurement value, and the noise power.

At operation S220, alternatively, communication environment information is acquired, and the measurement information is acquired according to the first signal strength measurement value, the second signal strength measurement value, and the communication environment information.

In an embodiment, the measurement information may also include noise power and communication environment information. The downlink first UE may send the measurement information including noise power or communication environment information to the first BS equipment such that the first BS equipment acquires the SINR according to the measurement information. For example, the downlink first UE can obtain the noise power configured according to its own communication requirements, and obtain measurement information according to the first signal strength measurement value, the second signal strength measurement value and the noise power. The first UE can also obtain the environmental information of the first UE to obtain communication environment information, which may include environmental noise information, terrain information or other information that affects communication quality. Then, the measurement information is acquired according to the first signal strength measurement value, the second signal strength measurement value and the communication environment information. It can be understood that the measurement information obtained according to the above information can be processed by the first BS equipment. The first signal strength measurement value, the second signal strength measurement value, the noise power and the communication environment information can be collectively called the measurement information. Unnecessary calculation is not needed. That is, the measurement information sent by the first UE to the first BS is regarded as the first signal strength measurement value, the second signal strength measurement value, the noise power and the communication environment information sent to the first BS equipment. Alternatively, the measurement information can be a piece of information obtained by processing based on the first signal strength measurement value, the second signal strength measurement value, the noise power and the communication environment information. The first BS equipment can obtain the first signal strength measurement value, the second signal strength measurement value and the communication environment information after parsing according to the measurement information. The present disclosure is not limited thereto.

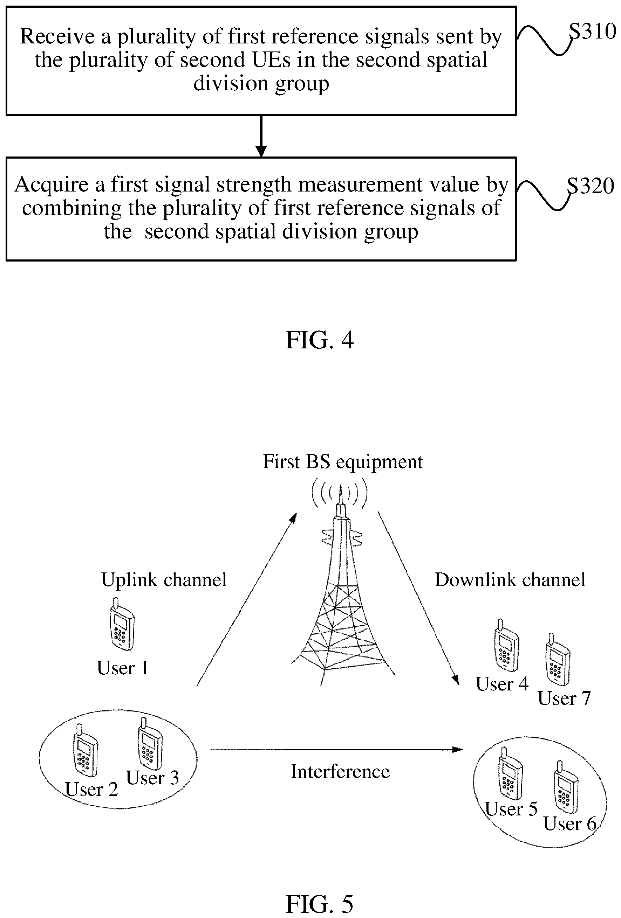

In an embodiment, a plurality of second UEs are provided. The plurality of second UEs are grouped into a second spatial division group. As shown in FIG. 4, operation S 110 as discussed above may further include but not limited to operation S310 and operation S320.

At operation S310, a plurality of first reference signals sent by the plurality of second UEs in the second spatial division group are received.

At operation S320, a first signal strength measurement value is acquired by combining the plurality of first reference signals of the second spatial division group.

In an embodiment, some users among a plurality of uplink users in the same cell transmit uplink data over the same time-frequency resource, and that is the case of spatial division for uplink Multi-User (MU). Similarly, some users among a plurality of downlink users receive downlink data over the same time-frequency resource, that is the case of spatial division for downlink MU. FIG. 5 depicts a communication scenario of spatial division for a plurality of uplink and downlink users (MU). Users 1 to 3 are uplink users with uplink users 2 and 3 in the same uplink spatial division group. Users 4 to 7 are downlink users with downlink users 5 and 6 in the same downlink spatial division group. In an embodiment of the present disclosure, the behavior of the determination of spatial division group by the BS takes precedence over full-duplex scheduling. The BS first determines the uplink and downlink spatial division pairing, and then decides the full-duplex pairing according to the measurement information in order to maximize the spectrum efficiency. In an embodiment, when the uplink second UEs are in the second spatial division group, since the second UEs in the uplink second spatial division group are in the same uplink spatial division group, the interference caused by the second UEs to the downlink first UE is regarded as an entirety. During full-duplex pairing, the plurality of second UEs are also paired as an entirety. The first UE can receive the first reference signals sent by all the second UEs in the second spatial division group, which is an uplink spatial division group, and obtain the first signal strength measurement value according to these first reference signals. In an embodiment, a downlink user can receive the uplink measurement reference signals sent by a plurality of uplink users in the uplink spatial division group, and the users in the uplink spatial division group is considered as an entirety, so the RSRP is obtained based on the uplink measurement reference signals in the uplink spatial division group.

In an embodiment, operation S320 as discussed above further include, but is not limited to, the following operation in which, a first signal strength measurement value is obtained by weighting a plurality of first reference signals in the second spatial division group.

In an embodiment, the interference caused by the plurality of second UEs in the second spatial division group to the downlink first UE is considered as interference of an entirety. The plurality of second UEs are also paired as an entirety during full duplex pairing. Thus, the first UE obtains the first signal strength measurement value according to weighting of the first reference signals in the second spatial division group. In an embodiment, the first signal strength measurement value is obtained by adding the first reference signals sent by the plurality of second UEs in the second spatial division group. For example, as shown in FIG. 5, downlink users 4 to 7 respectively detect the URSs from uplink users 1 to 3 at corresponding time-frequency positions and calculate the reference signal reception power $RSRP\_URS_Y^X$ , where $X \in [U1,U2U3]$, $Y \in [D4, D5,D6,D7]$. Users 2 and 3 belong to the same uplink spatial division group, so the RSRP of the uplink spatial division group containing users 2 and 3 can be calculated as

$$RSRP\_URS_Y^{U2U3} = RSRP\_URS_Y^{U2} + RSRP\_URS_Y^{U3}.$$

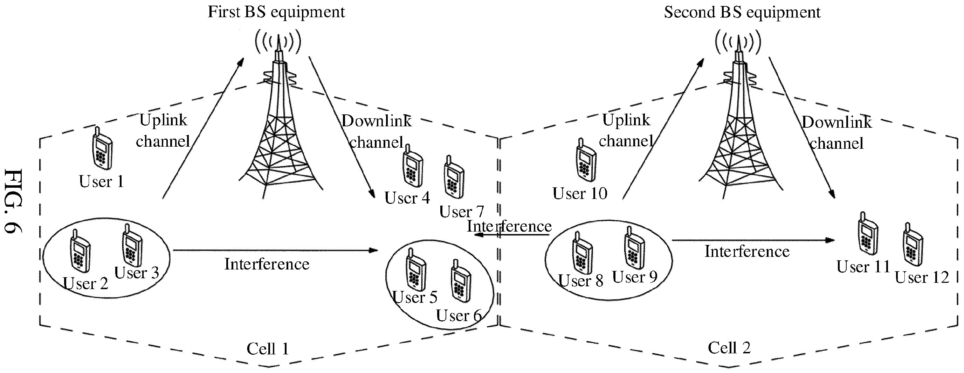

It should be noted that the second UEs can also include uplink users in neighboring cells. Referring to FIG. 6, when the first UE in an embodiment of the present disclosure is a downlink user in cell 1, the first BS equipment is a BS in cell 1, and a plurality of second UEs may be presented, including uplink users in cell 1 and uplink users in neighboring cell 2. The first UE is interfered by uplink users in this cell, and uplink users in neighboring cells. In view of this, the method for communication according to an embodiment of the present disclosure is intended to further eliminate the interference of neighboring cells. The first signal strength measurement value is obtained according to the first reference signals of different uplink users. It can be understood that the first signal strength measurement value is also obtained by weighting the first reference signals sent by second UEs in different cells.

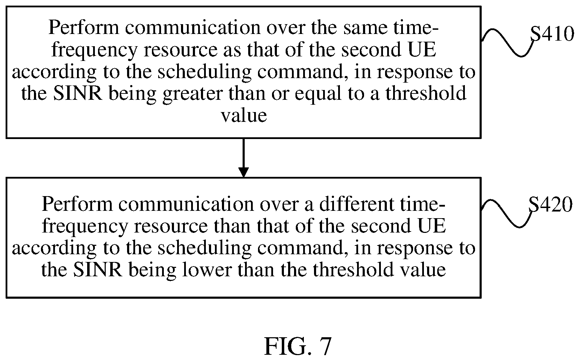

As shown in FIG. 7, in an embodiment, the performing of the communication according to the scheduling command in the operation S140 as discussed above may include, but is not limited to, at least one of the following operations S410 or S420.

At operation S410, communication over the same time-frequency resource as that of the second UE is performed according to the scheduling command, in response to the SINR being greater than or equal to a threshold value.

At operation S420, communication over a different time-frequency resource than that of the second UE is performed according to the scheduling command, in response to the SINR being lower than the threshold value.

In an embodiment, the first UE performs communication scheduling according to the scheduling command sent by the first BS equipment. When the first BS equipment determines and obtains the scheduling command, the first BS equipment obtains the threshold value of the minimum SINR acceptable for communication requirements between the UEs, and makes a determination based on the relationship between the SINR and the threshold value. When the SINR is greater than or equal to the threshold value, each of the downlink first UE and the uplink second UE can perform respective full-duplex communication over the same time-frequency resource. Hence, the first UE performs respective communication over the same time-frequency resource as that of the second UE according to the scheduling command. When the SINR is less than the threshold value, the downlink first UE and the uplink second UE cannot schedule full-duplex communication over the same time-frequency resource. Therefore, the first UE performs respective communication over a different time-frequency resource than that of the second UE according to the scheduling command. Through the determination of the relationship between the SINR and the minimum threshold value, the uplink and downlink users with small mutual interference can be scheduled to utilize the same time-frequency resource for respective full-duplex communication. As such, the SINR of UEs in the cell is greatly improved, communication spectrum efficiency is significantly improved.

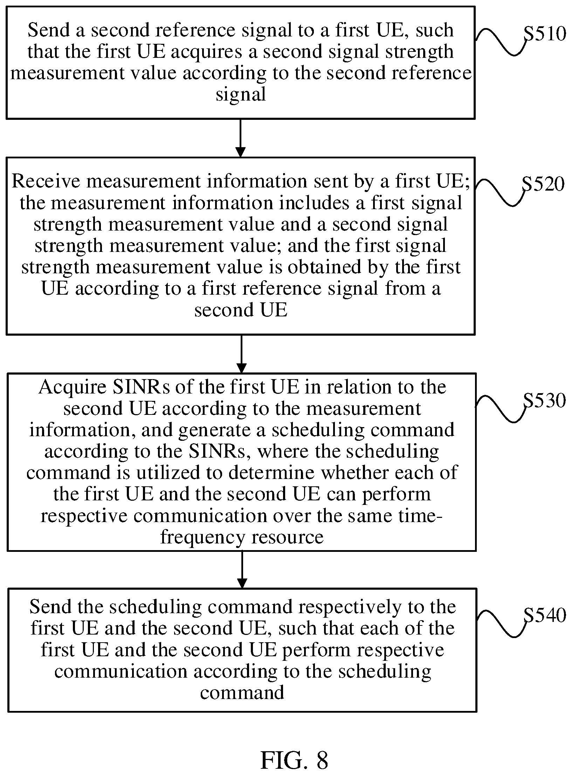

According to an embodiment, a method for communication is provided. The method is applied to a first BS equipment. Referring to FIG. 8, the method includes but is not limited to operation S510, operation S520, operation S530 and operation S540.

At operation S510, a second reference signal is sent to a first UE, such that the first UE acquires a second signal strength measurement value according to the second reference signal.

At operation S520, measurement information sent by a first UE is received. The measurement information includes a first signal strength measurement value and a second signal strength measurement value. The first signal strength measurement value is obtained by the first UE according to a first reference signal from a second UE.

At operation S530, SINR of the first UE in relation to the second UE is acquired according to the measurement information, and a scheduling command is generated according to the SINR. The scheduling command is utilized to determine whether each of the first UE and the second UE can perform respective communication over the same time-frequency resource.

At operation S540, the scheduling command is respectively sent to the first UE and the second UE, such that the first UE and the second UE perform communication according to the scheduling command.

In an embodiment, the first UE and the second UE can communicate through the first BS equipment. The first BS equipment sends the second reference signal to the first UE, such that the first UE obtains the second signal strength measurements respectively according to the second reference signal. The first UE further obtains the first signal strength measurement value according to the first reference signal sent by the second UE. As such, the first BS equipment can receive the measurement information sent by the first UE. The measurement information includes a first signal strength measurement value and a second signal strength measurement value. The first BS equipment calculates the SINR between the first UE and the second UE according to the measurement information, and obtains a scheduling command according to the SINR. The scheduling command can be utilized to determine whether the first UE and the second UE communicate over the same time-frequency resource. The first BS equipment sends the scheduling command respectively to the first UE and the second UE. When it is determined that the first UE and the second UE can perform communications over the same time-frequency resource, the first UE and the second UE can respond to the scheduling command and perform full-duplex communication cover the same time-frequency resource. Otherwise, full-duplex communications are not scheduled over the same time-frequency resource.

It should be noted that the first UE and the second UE are downlink user and uplink user camping on a cell respectively. Through the method for communication according to an embodiment of the present disclosure, inter-user interference can be effectively eliminated through user measurement reporting and base station scheduling. Uplink and downlink users with small mutual interference can be scheduled to utilize the same time-frequency resources for full-duplex communication. As such, the SINR of UEs in the cell is greatly improved, and the communication spectrum efficiency is thus significantly improved. The embodiment of the present disclosure is simple to implement, accurate in interference elimination, flexible and simple in configuration, and promotes full-duplex technology application in the systems with a cellular cell. In this embodiment, the first UE is a downlink user and the second UE is an uplink user. Hence, the first reference information is uplink reference information sent by the uplink user and the second reference information is downlink reference information sent by the first BS equipment. Same description is applied to the method for communication applied to the first UE as discussed above.

In an embodiment, the first reference signal is an Uplink Reference Signal (URS) periodically or aperiodically sent by an uplink user. The URS can be employed for interference measurement. The periodicity or aperiodicity of the transmission can be set according to practical communication requirements. It can be understood that, the URS can be Demodulation Reference Signal (DMRS) or Sounding Reference Signal (SRS), or another specially designed reference signal which can be employed to improve the accuracy of interference channel measurement. The sequence and time-frequency position information of all uplink reference signals can be preset or broadcast to all users by the BS. As such, each user also knows the sequence and time-frequency position of the measurement reference signals sent by other UEs. The first signal strength measurement value can be RSRP or another measurement value that can reflect the signal strength, such as RSRQ obtained according to the URS, and the type of the first signal strength measurement value is not limited in the present disclosure. The first signal strength measurement value is illustrated as RSRP in an embodiment of the present disclosure. It can be understood that since the antenna of a UE is not design for separate transmission and reception and the UEs may perform the transmission and/or reception over the same frequency concurrently, the interference between users exhibits some reciprocity in a certain time when interference occurs.

In an embodiment, the second reference signal is a Downlink Reference Signal (DRS) periodically or aperiodically sent by the first BS equipment. The DRS can be employed for interference measurement. The periodicity or aperiodicity of the transmission can be set according to practical communication requirements. It can be understood that, the DRS can be a Channel State Information Reference Signal (CSI-RS), or another specially designed reference signal. The second reference signal is utilized for users to measure the expected signal of the BS, which can be utilized to improve the accuracy of interference channel measurement. The sequence and time-frequency position information of all downlink reference signals are also preset or broadcasted by the BS to all users. The second signal strength measurement value can be RSRP or RSRQ obtained according to the DRS, and the type of the second signal strength measurement value is not limited in the present disclosure. The second signal strength measurement value is illustrated as RSRP in an embodiment of the present disclosure.

In an embodiment, the measurement information includes the noise power of the first UE. The operation S510 as discussed above may further include but not be limited to the following operation:

acquiring the SINR according to the first signal strength measurement value, the second signal strength measurement value and the noise power indicated by the measurement information.

In an embodiment, the measurement information includes the noise power of the first UE. The first BS equipment obtains the SINR according to the first signal strength measurement value, the second signal strength measurement value and the noise power indicated by the measurement information. For example, the SINR is obtained by dividing the second signal strength measurement value by the sum of the first signal strength measurement value and the noise power. The SINR obtained with noise power combined can more accurately reflect the interference of communication and improve the accuracy of scheduling.

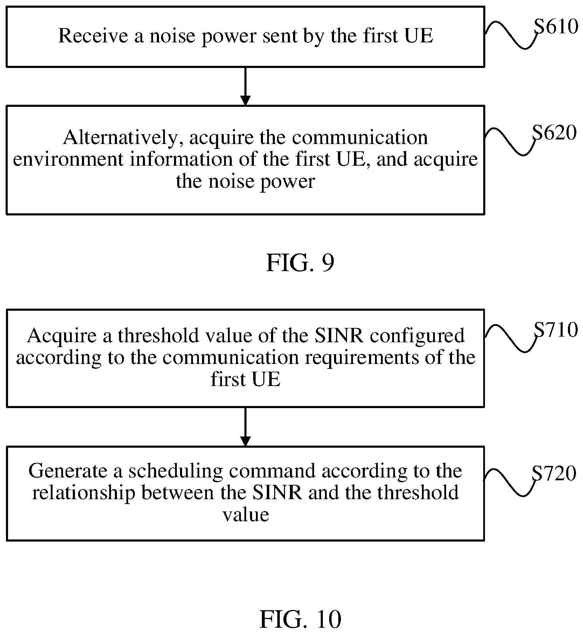

As shown in FIG. 9, in an embodiment, the noise power is acquired according to at least one of the following operations S610 or S620.

At operation S610, noise power sent by the first UE is received.

At operation S620, alternatively, the communication environment information of the first UE is acquired, and the noise power is acquired.

In an embodiment, the noise power used by the first BS equipment during the calculation of the SINR can be sent by the first UE. The measurement information sent by the first UE can include the noise power. The first BS equipment can obtain the noise power according to the measurement information. Alternatively, the first UE can directly send the noise power to the first BS equipment for the first BS equipment to calculate the SINR according to the noise power. In another embodiment, the noise power can be preset by the first BS equipment. The first BS equipment can set a fixed noise floor value according to the communication requirements. In an embodiment, the first BS equipment can obtain the communication environment information of the first UE, which can include environmental noise information, terrain information or other information that affects the communication quality, and obtain the noise power according to the communication environment information. The communication environment information can be pre-stored by the first BS equipment according to the environment where the first UE is located, judged by other environmental factors, or sent by the first UE. The first UE can obtain its own communication environment information and send it to the first BS equipment. The first UE can also send measurement information containing its own communication environment information to the first BS equipment. The first BS equipment can obtain communication environment information according to the measurement information and obtain noise power according to the communication environment information. The present disclosure does not specifically limit where the noise power comes from.

It can be understood that the first signal strength measurement value, the second signal strength measurement value, the noise power and the communication environment information can be collectively called the measurement information. Unnecessary calculation is not needed. That is, the measurement information sent by the first UE to the first BS is regarded as the first signal strength measurement value, the second signal strength measurement value, the noise power and the communication environment information sent to the first BS equipment. Alternatively, the measurement information can be a piece of information obtained by processing based on the first signal strength measurement value, the second signal strength measurement value, the noise power and the communication environment information. The first BS equipment can obtain the first signal strength measurement value, the second signal strength measurement value and the communication environment information after parsing according to the measurement information. The present disclosure is not limited thereto.

As shown in FIG. 10, in an embodiment, generating the scheduling command according to the SINR in operation S530 as discussed above may include, but is not limited to, the following operations S710 and S720.

At operation S710, a threshold value of the SINR configured according to the communication requirements of the first UE is required.

At operation S720, a scheduling command is generated according to the relationship between the SINR and the threshold value.

In an embodiment, when the first BS equipment determines and obtains the scheduling command, the first BS equipment obtains the threshold value of the minimum SINR acceptable for communication requirements between UEs. The specific value can be flexibly configured according to the scene environment. The determination is made based on the relationship between the SINR and the threshold value. By determining the SINR and the minimum threshold value, the scheduling command is generated according to the relationship between the SINR and the threshold value. Hence, uplink and downlink users with small mutual interference can be scheduled to utilize the same time-frequency resources for full-duplex communication respectively. As such, the SINR of UEs in the cell is greatly improved, communication spectrum efficiency is significantly improved.

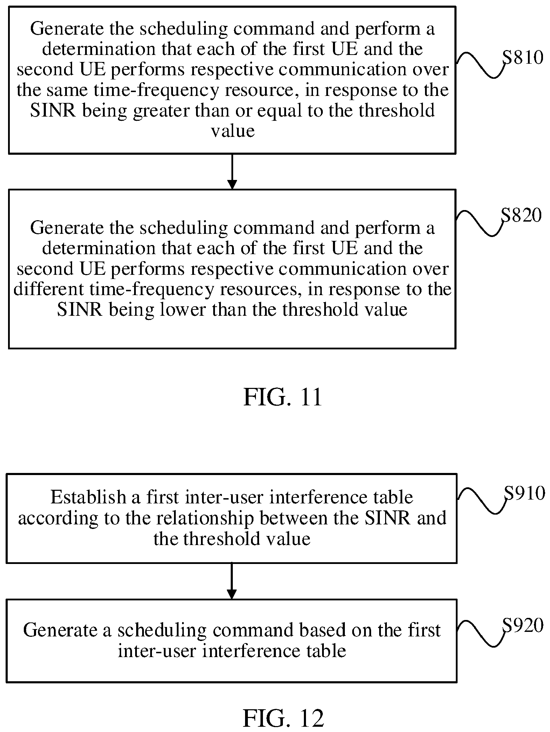

As shown in FIG. 11, in an embodiment, S720 as discussed above may include, but is not limited to, the following operations S810 and S820.

At operation S810, the scheduling command is generated, and a determination is performed that each of the first UE and the second UE performs respective communication over a same time-frequency resource, in response to the SINR being greater than or equal to the threshold value.

At operation S820, the scheduling command is generated, and a determination is performed that each of the first UE and the second UE performs respective communication over different time-frequency resources, in response to the SINR being lower than the threshold value.

In an embodiment, the first UE and the second UE perform communication scheduling according to the scheduling command sent by the first BS equipment. When the first BS equipment determines and obtains the scheduling command, the first BS equipment obtains the threshold value of the minimum SINR acceptable for communication requirements between the UEs, and makes a determination based on the relationship between the SINR and the threshold value. When the SINR is greater than or equal to the threshold value, each of the downlink first UE and the uplink second UE can perform respective full-duplex communication over the same time-frequency resource. Hence, the first BS equipment generates a scheduling command and determines that each of the first UE and the second UE perform respective communication over the same time-frequency resource. When the SINR is less than the threshold value, the downlink first UE and the uplink second UE cannot schedule full-duplex communication over the same time-frequency resource. Therefore, the first BS equipment generates a scheduling command and determines that the each of first UE and the second UE perform respective communication over different time-frequency resources. Through the determination of the relationship between the SINR and the minimum threshold value, the uplink and downlink users with small mutual interference can be scheduled to utilize the same time-frequency resource for respective full-duplex communication. As such, the SINR of UEs in the cell is greatly improved, communication spectrum efficiency is significantly improved.

As shown in FIG. 12, in an embodiment, S720 as discussed above may include, but is not limited to, the following operations S910 and S920.

At operation S910, a first inter-user interference table is established according to the relationship between the SINR and the threshold value (which is greater in value).

At operation S920, a scheduling command is generated based on the first inter-user interference table.

In an embodiment, the BS obtains the scheduling command according to the established inter-user interference table, by means of which communication scheduling is performed. For example, the first BS equipment establishes a first inter-user interference table according to the relationship between the calculated SINR and the threshold value, generates a scheduling command based on the first inter-user interference table, and determines whether each of the downlink user and the uplink user can be scheduled for respective full-duplex communication over the same time-frequency resource according to the table. Through the determination based on the established table, it is beneficial to data storage and judgment of the BS. The relation stored in the table is easy for the BS to obtain intuitively. In an embodiment, when the downlink first UE periodically or aperiodically reports measurement information, the first BS equipment can periodically or aperiodically update and maintain the first inter-user interference table.

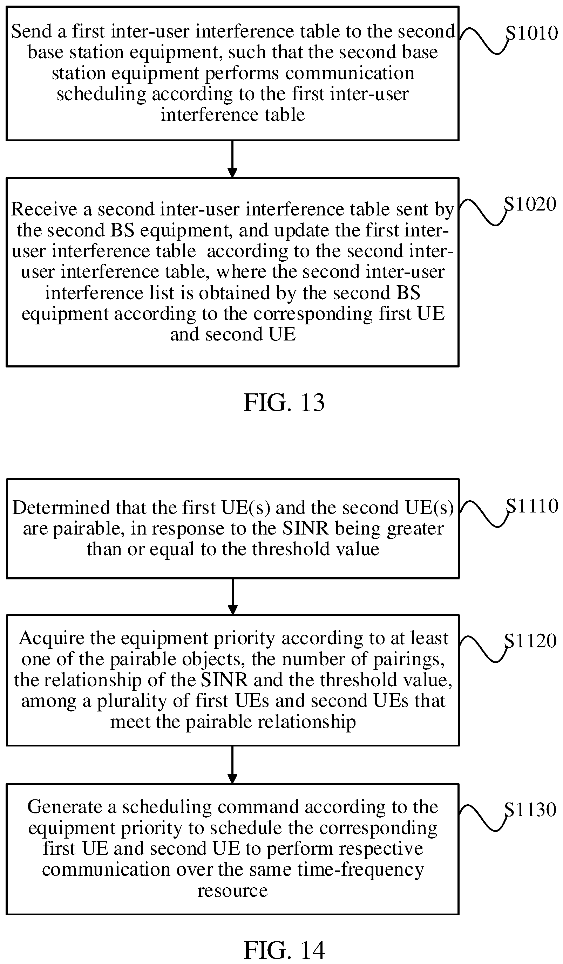

In an embodiment, the second UE is in communicative connection with the second BS equipment. Referring to FIG. 13, after operation S910, the method may further include but is not limited to operation S1010 and operation S1020.

At operation S 1010, a first inter-user interference table is sent to the second BS equipment, such that the second BS equipment performs communication scheduling according to the first inter-user interference table.

At operation S1020, a second inter-user interference table sent by the second BS equipment is received, and the first inter-user interference table is updated according to the second inter-user interference table. The second inter-user interference table is obtained by the second BS equipment according to the corresponding first UE and second UE.

In an embodiment, the first BS equipment belongs to the cell 1. The first UEs camping on the cell 1 are interfered by signals from a neighboring cell 2 in which second BS equipment is provided. Cell 2 also has a downlink second UE and an uplink first UE camping thereon. A first UE camping on the cell 1 is interfered by another uplink first UE camping on the cell 1 as well as the uplink first UE of the neighboring cell 2. In view of this, in the method for communication according to an embodiment of the present disclosure, the interference from neighboring cells is to be eliminated. Similarly, the second BS equipment can obtain the second inter-user interference table according to the corresponding first UEs and second UEs camping on cell 2. In order to improve the communication scheduling ability between cells, the first BS equipment can send the first inter-user interference table to the second BS equipment. The first inter-user interference table is obtained by the first BS equipment based on the first UEs and the second UEs camping on cell 1. After obtaining the first inter-user interference table, the second BS equipment can update the second inter-user interference table according to the first inter-user interference table. The first BS equipment can also receive the second inter-user interference table sent by the second BS equipment and update the first inter-user interference table according to the second inter-user interference table. Finally, a multi-cell joint interference table is formed, which improves the communication scheduling ability between cells. It can be understood that the first BS equipment can send the first inter-user interference table to the second BS equipment periodically or aperiodically. The second BS equipment can also send the second inter-user interference table to the first BS equipment periodically or aperiodically.

In an embodiment, a plurality of first UEs and/or a plurality of second UEs are provided. As shown in FIG. 14, the operation S810 discussed above may further include but not limited to operation S1110, operation S1120 and operation S1130.

At operation S1110, it is determined that the first UE(s) and the second UE(s) are pairable, in response to the SINR being greater than or equal to the threshold value.

At operation S1120, the equipment priority is acquired according to at least one of the pairable objects, the number of pairings, the relationship between the SINR and the threshold value, among a plurality of first UEs and second UEs that meet the pairable relationship.

At operation S1130, a scheduling command is generated according to the equipment priority to schedule the corresponding first UE and second UE to perform respective communication over the same time-frequency resource.

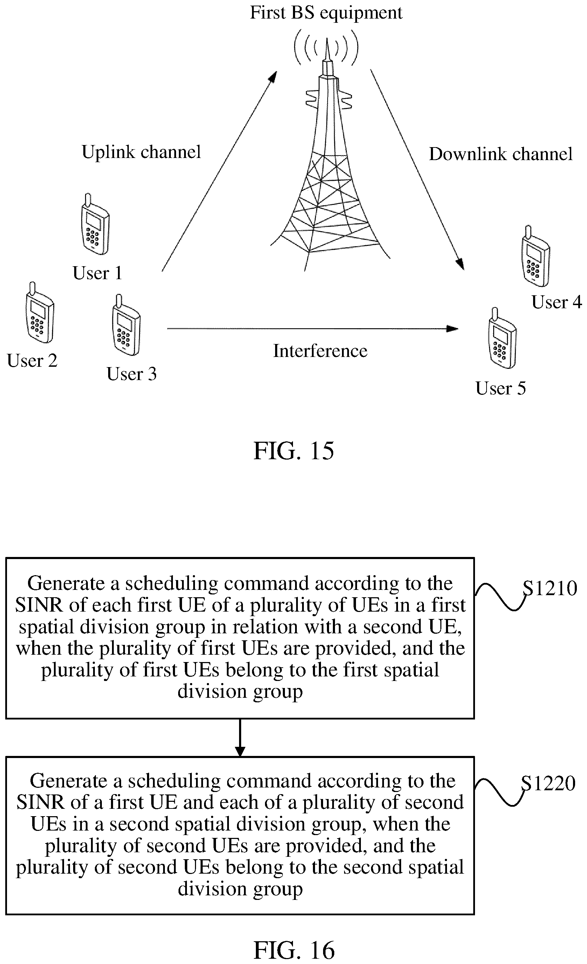

In an embodiment, as shown in FIG. 15, the first BS equipment belongs to the cell 1. A plurality of first UEs and second UEs are camping on cell 1. When the SINR is greater than or equal to the threshold value, it indicates that the scheduling conditions have been met between users in such a case. Therefore, in order to optimize the scheduling, such that more uplink and downlink users can be paired in full duplex, the first BS equipment can first determine that the first UE and the second UE meeting the scheduling requirements are pairable, then acquire the equipment priority according to at least one of the pairable objects, the number of pairings, or the relationship between the SINR and the threshold value, among a plurality of first UEs and second UEs meeting the pairable relationship. The pairable objects indicate which first UE and which second UE are pairable. The number of pairings indicate whether a first UE and a plurality of second UEs are pairable, or a plurality of first UEs and a second UE are pairable, or a plurality of first UEs and a plurality of second UEs are pairable. The relationship between the SINR and the threshold value indicates the absolute value of the SINR minus the threshold value. Different equipment priority levels can be set according to the pairing objects, the number of pairings, and the relationship between the SINR and the threshold value. The present disclosure is not limited thereto. The first BS equipment generates a scheduling command based on the equipment priority to schedule the corresponding first UE and second UE to perform respective communication over the same time-frequency resource.

It should be noted that in a multi-user scenario, it is possible for an uplink second UE to perform full-duplex pairing with a plurality of downlink first UEs. Similarly, a downlink first UE can also perform full-duplex pairing with a plurality of uplink second UEs. In such a case, the first BS equipment can design a pairing scheme to realize full-duplex pairing. The principle is to enable as many uplink and downlink users to perform full-duplex pairing as possible. The present disclosure does not limit the pairing scheme. In the scheduling of an embodiment, if a downlink first UE has only one uplink second UE in pairable relationship, the pair of uplink and downlink users will be paired first, and then the pair of users will be removed. If a plurality of downlink first UEs all have only one uplink second UE in pairable relationship, the downlink first UE with the largest absolute value of the SINR minus the threshold value will be paired with the uplink second UE, and then the pair of users will be removed. If a downlink first UE has a plurality of uplink second UEs that are pairable, the corresponding uplink second UE with the largest SINR or the largest absolute value of the SINR minus the threshold value is selected for pairing, and then the pair of users is removed until only uplink and downlink users that do not meet the pairing conditions are left.

As shown in FIG. 16, in an embodiment, generating the scheduling command according to the SINR in operation S530 as discussed above may include, but is not limited to, the following operations S1210 and S1220.

At operation S 1210, a scheduling command is generated according to the SINR of each first UE of a plurality of UEs in a first spatial division group in relation with a second UE, when the plurality of first UEs are provided, and the plurality of first UEs belong to the first spatial division group.

At operation S 1220, a scheduling command is generated according to the SINR of a first UE and each of a plurality of second UEs in a second spatial division group, when the plurality of second UEs are provided, and the plurality of second UEs belong to the second spatial division group.

In an embodiment, some uplink users in the same cell transmit uplink data over the same time-frequency resource, that is the case of uplink MU-spatial division. Similarly, some downlink users receive downlink data over the same time-frequency resource, and that is the case of downlink MU-spatial division. In an embodiment, the behavior of the determination of the spatial division group by the BS takes precedence over full-duplex scheduling. The BS first determines the uplink and downlink spatial division pairing, and then determines the full-duplex pairing according to the measurement information in order to maximize the spectrum efficiency. For example, a plurality of first UEs are provided. The plurality of first UEs belong to a first spatial division group. A scheduling command is generated according to the SINR of each first UE in the first spatial division group in relation to a second UE. The first BS equipment performs scheduling by regarding the UEs in the downlink first spatial division group as an entirety. Only when the SINR of each first UE in the first spatial division group in relation with the second UE is greater than a threshold value, the scheduling command indicating that the UEs in the first spatial division group and the second UE be scheduled over the same time-frequency resource is generated. When a plurality of second UEs are provided, and the second UEs belong to the second spatial division group, a scheduling command is generated according to the SINR of the first UE and each second UE in the second spatial division group. Since the second UEs in the uplink second spatial division group are in the same uplink spatial division group, the interference caused by the second UEs to the downlink first UE is regarded as an entirety. During full-duplex pairing, the plurality of second UEs are also paired as an entirety. The first UE can receive the first reference information sent by all the second UEs in the second spatial division group, which is an uplink spatial division group, and obtain the first signal strength measurement value according to these first reference signals. The first BS equipment obtains the SINR according to the first signal strength measurement value, that is, the second UEs in the second spatial division group are considered as an entirety. In an embodiment, a downlink user can receive the uplink measurement reference signals sent by a plurality of uplink users in the uplink spatial division group, and the users in the uplink spatial division group is considered as an entirety, so the RSRP is obtained based on the uplink measurement reference signals in the uplink spatial division group.

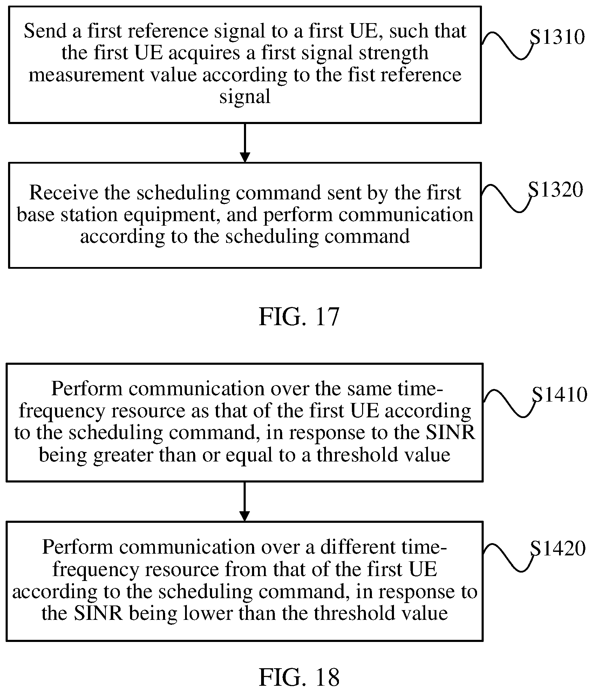

According to an embodiment, a method for communication is provided. The method is applied to a second UE. Referring to FIG. 17, the method includes but is not limited to operation S1310 and operation S1320.

At operation S1310, a first reference signal is sent to a first UE, such that the first UE acquires a first signal strength measurement value according to the fist reference signal.

At operation S1320, the scheduling command sent by the first BS equipment is received, and communication is performed according to the scheduling command.

In an implementation, the scheduling command is obtained by the first BS equipment according to the SINRs of the first UE and the second UE. The scheduling command is utilized for determining whether each of the first UE and the second UE perform respective communication over the same time-frequency resource. The SINRs are obtained by the first BS equipment according to the measurement information that includes a first signal strength measurement value and a second signal strength measurement value. The second signal strength measurement value is obtained by the first UE according to a second reference signal sent by the first BS equipment.

In an embodiment, the first UE and the second UE can communicate through the first BS equipment. The second UE can send the first reference signal to the first UE, such that the first UE obtains the first signal strength measurement value according to the first reference signal. The first UE sends the measurement information obtained from the first signal strength measurement value and the second signal strength measurement value to the first BS equipment for scheduling control. The first BS equipment calculates the Signal to Interference plus Noise Ratio (SINR) between the first UE and the second UE according to the measurement information, and acquires a scheduling command according to the SINR. The first BS equipment acquires a scheduling command according to SINR. The scheduling command can be utilized to determine whether the first UE and the second UE perform respective communication over the same time-frequency resource. The first BS equipment sends the scheduling command to the first UE and the second UE. When it is determined that the first UE and the second UE can perform respective communication over the same time-frequency resource, the first UE and the second UE conduct respective full-duplex communication over the same time-frequency resource in response to the scheduling command. Otherwise, the first and second UEs will not schedule full-duplex communication over the same time-frequency resource.

It should be noted that the first UE and the second UE are downlink user and uplink user camping on a cell respectively. Through the method for communication according to an embodiment of the present disclosure, inter-user interference can be effectively eliminated through user measurement reporting and BS scheduling. Uplink and downlink users with small mutual interference can be scheduled to utilize the same time-frequency resources for full-duplex communication. As such, the SINR of UEs in the cell is greatly improved, and the communication spectrum efficiency is thus significantly improved. The embodiment of the present disclosure is simple to implement, accurate in interference elimination, flexible and simple in configuration, and promotes full-duplex technology application in the system with a cellular cell. In this embodiment, the first UE is a downlink user and the second UE is an uplink user. Hence, the first reference information is uplink reference information sent by the uplink user and the second reference information is downlink reference information sent by the first BS equipment. Same description is applied to the method for communication applied to the first UE as discussed above.

In an embodiment, the first reference signal is an Uplink Reference Signal (URS) periodically or aperiodically sent by an uplink user. The URS can be employed for interference measurement. The periodicity or aperiodicity of the transmission can be set according to practical communication requirements. It can be understood that, the URS can be Demodulation Reference Signal (DMRS) or Sounding Reference Signal (SRS), or another specially designed reference signal which can be employed to improve the accuracy of interference channel measurement. The sequence and time-frequency position information of all uplink measurement reference signals can be preset or broadcast to all users by the BS. As such, each user also knows the sequence and time-frequency position of the measurement reference signals sent by other UEs. The first signal strength measurement value can be RSRP or another measurement value that can reflect the signal strength, such as RSRQ obtained according to the URS, and the type of the first signal strength measurement value is not limited in the present disclosure. The first signal strength measurement value is illustrated as RSRP in an embodiment of the present disclosure. It can be understood that since the antenna of a UE is not design for separate transmission and reception and the UEs may perform the transmission and/or reception over the same frequency concurrently, the interference between users exhibits some reciprocity in a certain time when interference occurs.

In an embodiment, the second reference signal is a Downlink Reference Signal (DRS) periodically or aperiodically sent by the first BS equipment. The DRS can be employed for interference measurement. The periodicity or aperiodicity of the transmission can be set according to practical communication requirements. It can be understood that, the DRS can be a Channel State Information Reference Signal (CSI-RS), or another specially designed reference signal. The second reference signal is utilized for users to measure the expected signal of the BS, which can be utilized to improve the accuracy of interference channel measurement. The sequence and time-frequency position information of all downlink measurement reference signals are also preset or broadcasted by the BS to all users. The second signal strength measurement value can be RSRP or RSRQ obtained according to the DRS, and the type of the second signal strength measurement value is not limited in the present disclosure. The second signal strength measurement value is illustrated as RSRP in an embodiment of the present disclosure.

As shown in FIG. 18, in an embodiment, the performing of the communication according to the scheduling command in the operation S1320 as discussed above may include, but is not limited to, at least one of the following operations S1410 and S1420.

At operation S1410, communication is performed over the same time-frequency resource as that of the first UE according to the scheduling command, in response to the SINR being greater than or equal to a threshold value.

At operation S1420, communication is performed over a different time-frequency resource from that of the first UE according to the scheduling command, in response to the SINR being lower than the threshold value.

In an embodiment, the second UE performs communication scheduling according to the scheduling command sent by the first BS equipment. When the first BS equipment determines and obtains the scheduling command, the first BS equipment obtains the threshold value of the minimum SINR acceptable for communication requirements between the UEs, and makes a determination based on the relationship between the SINR and the threshold value. When the SINR is greater than or equal to the threshold value, each of the downlink first UE and the uplink second UE can perform respective full-duplex communication over the same time-frequency resource. Hence, the second UE performs respective communication over the same time-frequency resource as that of the first UE according to the scheduling command. When the SINR is less than the threshold value, the downlink first UE and the uplink second UE cannot schedule full-duplex communication over the same time-frequency resource. Therefore, the second UE performs respective communication over a different time-frequency resource than that of the first UE according to the scheduling command. Through the determination of the relationship between the SINR and the minimum threshold value, the uplink and downlink users with small mutual interference can be scheduled to utilize the same time-frequency resource for respective full-duplex communication. As such, the SINR of UEs in the cell is greatly improved, communication spectrum efficiency is significantly improved.

It should be noted that the method for communication performed by the second UE may correspond to the method for communication performed by the first UE or the first BS equipment in the embodiments discussed above, and will not be repeated here.

In the following, some specific application scenarios are illustrated according to some embodiments of the present disclosure.

EMBODIMENT ONE

FIG. 2 depicts an embodiment of a method for communication for eliminating interference between users in full-duplex communication according to an embodiment of the present disclosure. The BS in a single cell is a full-duplex BS. The UEs are operating in Time Division Duplexing (TDD) mode, with user 1 as an uplink user and user 2 as a downlink user.

In this embodiment the following operations are included.

At operation 1.1, Uplink User 1 sends a first reference signal, i.e., the URS, periodically or aperiodically.

At operation 1.2, Downlink User 2 detects the URS from Uplink User 1, and calculates the first signal strength measurement value, i.e., RSRP which is denoted as $RSRP\_URS_{D2}^{U1}$, where U1 represents Uplink User 1 and D2 represents Downlink User 2. Since the antenna of a UE is not design for separate transmission and reception and the UEs may perform the transmission and/or reception over the same frequency concurrently, the interference between users exhibits reciprocity in a certain time when interference occurs. That is to say, at a certain moment in a certain time when interference occurs, if User 1 receives downlink data and User 2 sends uplink data, then the RSRP detected by downlink User 1 for signals from Uplink user 2 satisfies $RSRP\_URS_{D2}^{U1} = RSRP\_URS_{D1}^{U2}$.

At operation 1.3, the first BS equipment periodically or aperiodically sends the second reference signal, i.e., DRS. The downlink user 2 detects the DRS from the first BS equipment and calculates the second signal strength measurement value, i.e., RSRP, which is denoted as $RSRP\_DRS_{D2}^{B1}$, where B1 represents the first BS equipment.

At operation 1.4, the downlink User 2 reports the measurement information $RSRP\_URS_{D2}^{U1}$ and $RSRP\_DRS_{D2}^{B1}$ to the first BS equipment. The first BS equipment calculates $SINR_{D2}^{U1} = RSRP\_DRS_{D2}^{B1} \div (RSRP\_URS_{D2}^{U1} + N_{D2})$ of the downlink User 2, where $N_{D2}$ denotes the noise power of the downlink User 2. In particular, $N_{D2}$ can be reported by the downlink User 2 through a measurement or fixed as a noise floor value. The present disclosure does not limit how $N_{D2}$ is acquired. For the sake of brevity and convenience, $SINR_{D2}^{U1}$ will be simplified as $S_{D2}^{U1}$ below.

At operation 1.5, if $S_{D2}^{U1} \geq TH_{D2}$, the first BS equipment can schedule the downlink User 2 and the uplink User 1 to perform respective full-duplex communication over the same time-frequency resource, where $TH_{D2}$ is the minimum SINR threshold value that is acceptable for the communication requirements of the downlink User 2, and the specific value can be flexibly configured according to a particular scenario or environment. If $S_{D2}^{U1} < TH_{D2}$, the first BS equipment schedules the downlink User 2 and the uplink User 1 to perform respective communication over different time-frequency resources.

At operation 1.6, the first BS equipment generates and maintains a first inter-user interference table according to the received measurement information. The first BS equipment determines whether the downlink User 2 and the uplink User 1 can perform full-duplex pairing according to the table. The downlink user periodically or aperiodically reports measurement values. The first BS equipment periodically or aperiodically updates the interference table, as shown in Table 1 below.

Table 1 First Inter-user Interference table of Embodiment One

| Uplink                  Uplink    Downlink | User 2 |
|---|---|
| User 1 | $S_{D2}^{U1} \geq TH_{D2}$ |

EMBODIMENT TWO

FIG. 15 is an embodiment of a method for communication for eliminating inter-user interference in full-duplex communication according to an embodiment of the present disclosure. In embodiment two, only one uplink user and one downlink user are presented in a single cell. More generally, M uplink users and N downlink users are presented in the same cell. FIG. 15 depicts a communication scenario where a plurality of uplink users and downlink users are presented in Embodiment 2, in which users 1 to 3 are uplink users and users 4 to 5 are downlink users.

In this embodiment the following operations are included.

At operation 2.1, Uplink users 1 to 3 periodically or aperiodically send the first reference signal, i.e., URS, at different time-frequency positions.

At operation 2.2, Downlink users 4 to 5 respectively detect the URS from the uplink Users 1 to 3 at the corresponding time-frequency positions and calculate the first signal strength measurement value, i.e., RSRP, which is denoted as $RSRP\_URS_Y^X$, where X $\in$ [U1,U2,U3] and Y $\in$ [D4,D5]. Similarly, since the antenna of a UE is not design for separate transmission and reception and the UEs may perform the transmission and/or reception over the same frequency concurrently, the interference between users exhibits some reciprocity in a certain time when interference occurs.

At operation 2.3, the first BS equipment periodically or aperiodically sends the second reference signal, i.e., DRS. Downlink Users 4 to 5 detect the DRS from the first BS equipment and calculate the second signal strength measurement value, i.e., RSRP, which is denoted as $RSRP\_DRS_Y^{B1}$, where B1 represents the first BS equipment.

At operation 2.4, Downlink users 4 to 5 report the measurement information to the first BS equipment. The first BS equipment calculates $SINR_Y^X = RSRP\_DRS_Y^{B1} \div (RSRP\_URS_Y^X + N_Y)$ of downlink Users 4 to 5, where $N_Y$ is the noise power of downlink User Y. $N_Y$ can be reported by user Y through measurement or fixed as a noise floor value. The present disclosure does not limit how $N_Y$ is acquired.

At operation 2.5, if $S_Y^X \geq TH_Y$ , the first BS equipment can schedule the downlink User Y and the uplink User X to perform respective full-duplex communication over the same time-frequency resource, where $TH_Y$ is the minimum SINR threshold value that is acceptable for the communication requirements of the downlink User Y, and the specific value can be flexibly configured according to a particular scenario or environment. If $S_Y^X < TH_Y$ , the first BS equipment schedules the downlink User Y and the uplink User X to perform respective communication over different time-frequency resources.

At operation 2.6, the first BS equipment generates and maintains a first inter-user interference table according to the received measurement information. The first BS equipment determines whether the downlink User Y and the uplink User X can perform full-duplex pairing according to the table. The downlink user periodically or aperiodically reports measurement values. The first BS equipment periodically or aperiodically updates the interference table.

At operation 2.7, in a multi-user scenario, it is possible for an uplink user to perform full-duplex pairing with a plurality of downlink users. For example, in Table 2, uplink user 2 can perform full-duplex pairing with downlink user 4 or 5. Similarly, a downlink user can also perform full-duplex pairing with a plurality of uplink users. For example, downlink user 4 can perform full-duplex pairing with uplink user 1 or 2. In such a case, the BS can design a pairing scheme to realize full-duplex pairing. The principle is to enable as many uplink and downlink users to perform full-duplex pairing as possible. The present disclosure does not limit the pairing scheme. For example, if only one uplink user can be paired with a downlink user, the pair of uplink and downlink users will be paired with priority. Then this pair of users will be removed. If a plurality of downlink users can be paired with only one uplink user, the downlink user having the largest ($S_Y^X - TH_Y$ ) will be paired with the uplink user and then this pair of users are removed. Then, if a downlink user can be paired with a plurality of uplink users, the largest corresponding uplink user will be selected for pairing and then this pair of users are removed until there are only uplink and downlink users that can not be paired, as shown in Table 2 below.

Table 2 First Inter-user Interference table of Embodiment Two

| Uplink       Uplink Downlink | User 4 | User 5 |
|---|---|---|
| User 1 | $S_{D4}^{U1} \geq TH_{D4}$ | $S_{D5}^{U1} < TH_{D5}$ |
| User 2 | $S_{D4}^{U2} \geq TH_{D4}$ | $S_{D5}^{U2} \geq TH_{D5}$ |
| User 3 | $S_{D4}^{U3} < TH_{D4}$ | $S_{D5}^{U3} < TH_{D5}$ |

EMBODIMENT THREE

FIG. 5 depicts an embodiment of a method for communication for eliminating inter-user interference in full-duplex communication according to an embodiment of the present disclosure. With respect to Embodiment Two, it is more general that m users among M uplink users in the same cell will transmit uplink data over the same time-frequency resource, that is the case for uplink MU spatial division. Similarly, n users among N downlink users will receive downlink data over the same time-frequency resource, that is the case for downlink MU spatial division. FIG. 5 depicts a communication scenario of a plurality of uplink and downlink users for MU spatial division in embodiment three, in which users 1 to 3 are uplink users, and users 2 and 3 are in the same uplink spatial division group. Users 4 to 7 are downlink users, and downlink users 5 and 6 are in the same downlink spatial division group. The behavior of the determination of spatial division group by the first BS equipment takes precedence over full-duplex scheduling. That is, the first BS equipment first determines the uplink and downlink spatial division pairing, and then determines the full-duplex pairing according to the measurement information in order to maximize the spectrum efficiency.

In this embodiment the following operations are included.

At operation 3.1, Uplink users 1 to 3 send the first reference signal, i.e., the URS at different time-frequency positions, periodically or aperiodically. Since uplink users 2 and 3 are in the same uplink spatial division group, the interference caused by uplink users 2 and 3 to downlink users is regarded as interference of an entirety, and uplink users 2 and 3 are also paired as an entirety during full duplex pairing.

At operation 3.2, downlink users 4 to 7 respectively detect the URS from the uplink Users 1 to 3 at the corresponding time-frequency positions and calculate the first signal strength measurement value, i.e., RSRP, which is denoted as $RSRP\_URS_Y^X$ , where $X \in$ [U1,U2U3] and $Y \in$ [D4,D5,D6,D7], and

$RSRP\_URS_Y^{U2U3} = RSRP\_URS_Y^{U2} + RSRP\_URS_Y^{U3}$ . Since downlink users 5 and 6 are in the same downlink spatial division group, downlink users 5 and 6 are also paired as an entirety during full-duplex pairing, that is, downlink users 5 and 6 need to meet the full-duplex pairing conditions before they can be paired.

At operation 3.3, the first BS equipment periodically or aperiodically sends the second reference signal, i.e., DRS. Downlink Users 4 to 7 detect the DRS from the first BS equipment and calculate the second signal strength measurement value, i.e., RSRP, which is denoted as $RSRP\_DRS_Y^{B1}$ , where B1 represents the first BS equipment.

At operation 3.4, downlink users 4 to 7 report the measurement information to the first BS equipment, and the first BS equipment calculates $SINR_Y^X = RSRP\_DRS_Y^{B1} \div (RSRP\_URS_Y^X + N_Y)$ of the downlink users 4 to 7. Similarly, $N_Y$ is the noise power of downlink user Y.

At operation 3.5, if $S_Y^X \geq TH_Y$ , the first BS equipment can schedule the downlink User Y and the uplink User X to perform respective full-duplex communication over the same time-frequency resource, where $TH_Y$ is the minimum SINR threshold value that is acceptable for the communication requirements of the downlink User Y, and the specific value can be flexibly configured according to a particular scenario or environment. If $S_Y^X < TH_Y$ , the first BS equipment schedules the downlink User Y and the uplink User X to perform respective communication over different time-frequency resources.

At operation 3.6, the first BS equipment generates and maintains an interference table according to the received measurement information. The first BS equipment determines whether the downlink User Y and the uplink User X can perform full-duplex pairing according to the table. The downlink user periodically or aperiodically reports measurement values. The first BS equipment periodically or aperiodically updates the interference table. As shown in Table 3, uplink user 1 meets the threshold condition for both downlink users 5 and 6. Uplink user 1 can perform a full duplex pairing with downlink users 5 and 6. Uplink users 2 and 3 meet the threshold condition for downlink user 6, but not for downlink user 5. As downlink users 5 and 6 are in the same downlink spatial division group, it is not possible for uplink users 2 and 3 to perform a full duplex pairing with downlink users 5 and 6. Uplink users 2 and 3 can perform a full duplex pairing with downlink user 7, as shown in Table 3 below.

Table 3 First Inter-user Interference table of Embodiment Three

| Uplink<br>Uplink<br>Downlink | User 4 | User 5<br>User 6 | User 7 |
|---|---|---|---|
| User 1 | $S_{D4}^{U1} \geq TH_{D4}$ | $S_{D5}^{U1} \geq TH_{D5}$ , $S_{D6}^{U1} \geq TH_{D6}$ | $S_{D7}^{U1} \geq TH_{D7}$ |
| User 2<br><br>User 3 | $S_{D4}^{U2U3} < TH_{D4}$ | $S_{D5}^{U2U3} < TH_{D5}$ ,<br><br>$S_{D6}^{U2U3} \geq TH_{D6}$ | $S_{D7}^{U2U3} \geq TH_{D7}$ |

EMBODIMENT FOUR

FIG. 6 is an embodiment of a method for communication for eliminating inter-user interference in full-duplex communication according to an embodiment of the present disclosure. In embodiment four, the communication scenario of multi-uplink and multi-downlink users of multi-cell is considered. Cell 1 has three uplink users 1 to 3 with uplink users 2 and 3 in the same uplink spatial division group, and four downlink users 4 to 7 with downlink users 5 and 6 in the same downlink spatial division group. Cell 2 has three uplink users 8 to 10 with uplink users 8 and 9 in the same uplink spatial division group, and two downlink users 11 and 12. As shown in FIG. 6, during full-duplex communication, the downlink users in cell 1 will be interfered not only by the uplink users in cell 1, but also by the uplink users in neighboring cell 2, especially when the downlink users are at the edge of the cell, the interference from neighboring cell users may be more serious.

In this embodiment the following operations are included.

At operation 4.1, Uplink users send the first reference signal, i.e., the URS at different time-frequency positions, periodically or aperiodically. Since uplink users 2 and 3 of cell 1 are in the same uplink spatial division group, the interference caused by uplink users 2 and 3 to downlink users is regarded as interference of an entirety, and uplink users 2 and 3 are paired as an entirety during full duplex pairing. Similarly, uplink users 8 and 9 of cell 2 are in the same uplink spatial division group, and the interference caused by uplink users 8 and 9 to downlink users is regarded as interference of an entirety. Uplink users 8 and 9 are also paired as an entirety during full-duplex pairing.

At operation 4.2, downlink users respectively detect the URS from the uplink Users at the corresponding time-frequency positions and calculate the first signal strength measurement value, i.e., RSRP, which is denoted as $RSRP\_URS_Y^X$ , where , $X \in [U1, U2U3, U8U9, U10]$ and $Y \in [D4, D5, D6, D7D11, D12]$. Since downlink users 5 and 6 are in the same downlink spatial division group, downlink users 5 and 6 are also paired as an entirety during full-duplex pairing, that is, downlink users 5 and 6 need to meet the full-duplex pairing conditions before they can be paired.

At operation 4.3, the first BS equipment and the second BS equipment periodically or aperiodically send the second reference signal, i.e., the DRS. Downlink users 4 to 7 detect the DRS from the first BS equipment and calculate the second signal strength measurement value, i.e., the RSRP, which is denoted as $RSRP\_DRS_Y^{B1}$ , where B1 represents the first BS equipment. Downlink users 11 and 12 detect the DRS from the second BS equipment and calculate the RSRP $RSRP\_DRS_Y^{B2}$ , where B2 represents the second BS equipment.

At operation 4.4, downlink users 4 to 7 report the measurement information to the first BS equipment, and the first BS equipment calculates $SINR_Y^X = RSRP\_DRS_Y^{B1} \div (RSRP\_URS_Y^X + N_Y)$ of the downlink users 4 to 7. Downlink users 11 and 12 report the measurement information to the second BS equipment. The second BS equipment calculates $SINR_Y^X = RSRP\_DRS_Y^{B2} \div (RSRP\_URS_Y^X + N_Y)$ of the downlink users 11 and 12.

At operation 4.5, if $S_Y^X \geq TH_Y$ , the first BS equipment can schedule the downlink User Y and the uplink User X to perform respective full-duplex communication over the same time-frequency resource, where $TH_Y$ is the minimum SINR threshold value that is acceptable for the communication requirements of the downlink User Y, and the specific value can be flexibly configured according to a particular scenario or environment. If $S_Y^X < TH_Y$ , the first BS equipment schedules the downlink User Y and the uplink User X to perform respective communication over different time-frequency resources.

At operation 4.6, the first BS equipment generates and maintains a first inter-user interference table according to the received measurement information. The first BS equipment determines whether the downlink User Y and the uplink User X can perform full-duplex pairing according to the table. The downlink user periodically or aperiodically reports measurement values. The first BS equipment periodically or aperiodically updates the interference table. The first BS equipment and the second BS equipment exchange interference table information of their own cells (such as through X2 interface, multi-cell cooperation, etc.), and finally form a multi-cell joint interference table 4. Table 4 is as follows:

Table 4 First Inter-user Interference table of Embodiment Four

| Uplink Uplink Downlink | | Cell 1 | | | Cell 2 | |
|---|---|---|---|---|---|---|
| | | User 4 | User 5 / User 6 | User 7 | User 11 | User 12 |
| Cell 1 | User 1 | $S_{D4}^{U1} \geq TH_{D4}$ | $S_{D5}^{U1} \geq TH_{D5}$ <br> $S_{D6}^{U1} \geq TH_{D6}$ | $S_{D7}^{U1} \geq TH_{D7}$ | $S_{D11}^{U1} \geq TH_{D11}$ | $S_{D12}^{U1} \geq TH_{D12}$ |
| | User 2 / User 3 | $S_{D4}^{U2U3} \geq TH_{D4}$ | $S_{D5}^{U2U3} < TH_{D5}$ <br> $S_{D6}^{U2U3} \geq TH_{D6}$ | $S_{D7}^{U2U3} \geq TH_{D7}$ | $S_{D11}^{U2U3} \geq TH_{D11}$ | $S_{D12}^{U2U3} < TH_{D12}$ |
| Cell 2 | User 8 / User 9 | $S_{D4}^{U8U9} < TH_{D4}$ | $S_{D5}^{U8U9} < TH_{D5}$ <br> $S_{D6}^{U8U9} < TH_{D6}$ | $S_{D7}^{U8U9} \geq TH_{D7}$ | $S_{D11}^{U8U9} \geq TH_{D11}$ | $S_{D12}^{U8U9} < TH_{D12}$ |
| | User 10 | $S_{D4}^{U10} \geq TH_{D4}$ | $S_{D5}^{U10} < TH_{D5}$ <br> $S_{D6}^{U10} \geq TH_{D6}$ | $S_{D7}^{U10} < TH_{D7}$ | $S_{D11}^{U10} \geq TH_{D11}$ | $S_{D12}^{U10} \geq TH_{D12}$ |

18

Finally, it should be noted that the above embodiments are only intended to illustrate the technical scheme of some embodiments of the present disclosure, but not limitations thereto. Although the scheme of the present disclosure has been described in detail with reference to the foregoing embodiments, those skilled in the art should understand that the technical solutions embodied in the foregoing embodiments can be modified, or some technical features can be replaced with equivalents without departing from the scope of the present disclosure.

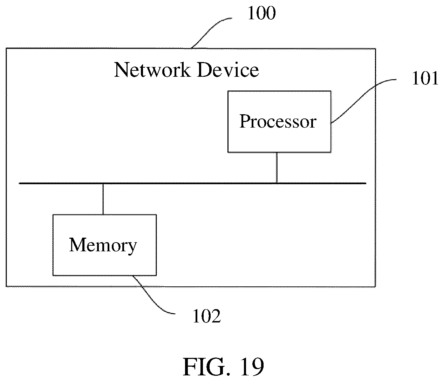

FIG. 19 shows a network device 100 according to an embodiment of the present disclosure. The network device 100 includes a processor 101, a memory 102, and a computer program stored in the memory 102 and executable by the processor 101, and the computer program, when is executed by the processor 101, causes the processor 101 to carry out the method for communication as described in any one of the embodiments above.

The processor 101 and the memory 102 may be connected by a bus or other means.

The memory 102, as a non-transient computer-readable storage medium, can be configured to store non-transitory software programs and non-transitory computer-executable programs, such as the method for communication as described in any one of the embodiments above in the present disclosure. The processor 101 executes the non-transitory software programs and instructions stored in the memory 102, such that the method for communication as described in any one of the embodiments above is carried out.

The memory 102 may include a program storage section and a data storage section, in which the program storage section may store an operating system and application programs for performing at least one operation, and data storage section may store program of the method for communication as described in any one of the embodiments above. In addition, the memory 102 may include high-speed random-access memory 102 and non-transitory memory 102, such as at least one memory device, flash memory device, or other non-transitory solid-state memory devices. In some embodiments, the memory 102 may include the memory 102 remotely arranged with respect to the processor 101, and the remote memory 102 may be connected to the network device 100 through a network. Examples of the above networks include, but are not limited to, the Internet, intranet, local area network, mobile communication network, and combinations thereof.

Non-transitory software programs and instructions for the method for communication of any one of the above embodiments are stored in a memory 102 which, when executed by at least one processor 101, causes the processor 101 to carry out method for communication of any one of the above embodiments, for example, operations S110 to S140 described in conjunction with FIG. 1, S210 to S220 described in conjunction with FIG. 3, S310 to S320 described in conjunction with FIG. 4, S410 to S420 described in conjunction with FIG. 7, S510 to S540 described in conjunction with FIG. 8, S610 to S620 described in conjunction with FIG. 9, S710 to S720 described in conjunction with FIG. 10, S810 to S820 described in conjunction with FIG. 11, S910 to S920 described in conjunction with FIG. 12, S1010 to S1020 described in conjunction with FIG. 13, S1110 to S1130 described in conjunction with FIG. 14, S1210 to S1220 described in conjunction with FIG. 16, S1310 to S1320 described in conjunction with FIG. 17, or S1410 to S1420 described in conjunction with FIG. 18.

An embodiment of the present disclosure provides a computer-readable storage medium storing a computer-executable instruction, the instruction is utilized to carry out any one of the methods as described above.

An embodiment of the present disclosure provides a computer-readable storage medium storing a computer-executable instruction which when executed by a control processor causes the control processor to carry out any one of the methods as described above, e.g., the operations S110 to S140 described in conjunction with FIG. 1, S210 to S220 described in conjunction with FIG. 3, S310 to S320 described in conjunction with FIG. 4, S410 to S420 described in conjunction with FIG. 7, S510 to S540 described in conjunction with FIG. 8, S610 to S620 described in conjunction with FIG. 9, S710 to S720 described in conjunction with FIG. 10, S810 to S820 described in conjunction with FIG. 11, S910 to S920 described in conjunction with FIG. 12, S1010 to S1020 described in conjunction with FIG. 13, S1110 to S1130 described in conjunction with FIG. 14, S1210 to S1220 described in conjunction with FIG. 16, S1310 to S1320 described in conjunction with FIG. 17, or S1410 to S1420 described in conjunction with FIG. 18.

Some embodiments of the present disclosure at least have the following beneficial effects. According to the method for communication in an embodiment of the present disclosure, the first UE and the second UE can communicate through the first BS equipment. The first UE can receive the first reference signal sent by the second UE and the second reference signal sent by the first BS equipment, and respectively obtain the first signal strength measurement value and the second signal strength measurement value according to the first reference signal and the second reference signal, and send the measurement information obtained from the first signal strength measurement value and the second signal strength measurement value to the first BS equipment for scheduling control. The first BS equipment obtains the SINR between the first UE and the second UE according to the measurement information, and obtains a scheduling command according to the SINR. The command can be used for determining whether the first UE and the second UE can perform respective communication over the same time-frequency resource. The first BS equipment sends the scheduling command to the first UE and the second UE. Through the method for communication in an embodiment of the present disclosure, the interference between users is effectively eliminated through the measurement report of the UE and the scheduling of the BS equipment. In this way, the interference elimination is accurate, the configuration is flexible and simple, and the network performance can be improved.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, storage device or other magnetic storage devices, or any other medium that can be configured to store desired information and accessible by a computer. Furthermore, it is well known to a person having ordinary skills in the art that communication media usually contains computer-readable instructions, data structures, program modules or other data in modulated data signals such as carrier waves or other transmission mechanisms, and can include any information delivery media.

It should also be understood that various implementations set forth in some embodiments of the present disclosure can be combined to achieve different technical effects without limitations.

Described above is a description of several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for communication, applied to a first User Equipment (UE), the method comprising:

   receiving a first reference signal sent by a second UE, and acquiring a first signal strength measurement value according to the first reference signal;
   receiving a second reference signal sent by a first base station (BS) equipment, and acquiring a second signal strength measurement value according to the second reference signal;
   acquiring measurement information according to the first signal strength measurement value and the second signal strength measurement value, and sending the measurement information to the first BS equipment, to instruct the first BS equipment to obtain a Signal to Interference plus Noise Ratio (SINR) through the measurement information, and to generate a scheduling command according to the SINR; wherein the scheduling command is utilized to determine whether each of the first UE and the second UE performs respective communication over the same time-frequency resource; and
   receiving the scheduling command sent by the first BS equipment, and performing communication according to the scheduling command.

2. The method according to claim 1, wherein acquiring the measurement information according to the first signal strength measurement value and the second signal strength measurement value comprises:

   acquiring a noise power, and acquiring the measurement information according to the first signal strength measurement value, the second signal strength measurement value, and the noise power; or
   acquiring communication environment information, and acquiring the measurement information according to the first signal strength measurement value, the second signal strength measurement value, and the communication environment information.

3. The method according to claim 1, wherein a plurality of second UEs comprising the second UE are provided, the plurality of second UEs are grouped into a second spatial division group, and receiving the first reference signal sent by the second UE and acquiring the first signal strength measurement value according to the first reference signal comprises:

receiving a plurality of first reference signals each sent by a respective one of the plurality of second UEs in the second spatial division group; and

combining the plurality of first reference signals of the second spatial division group to acquire the first signal strength measurement value.

4. The method according to claim 3, wherein combining the plurality of first reference signals of the second spatial division group to acquire the first signal strength measurement value comprises:
acquiring the first signal strength measurement value by weighting the plurality of first reference signals of the second spatial division group.

5. The method according to claim 1, wherein performing the communication according to the scheduling command comprises at least one of,

performing the communication over the same time-frequency resource as that of the second UE according to the scheduling command, in response to the SINR being greater than or equal to a threshold value; or
performing the communication over a different time-frequency resource from that of the second UE according to the scheduling command, in response to the SINR being lower than the threshold value.

6. A method for communication, applied to a first Base Station (BS) equipment, the method comprising:

sending a second reference signal to a first User Equipment (UE), to instruct the first UE to acquire a second signal strength measurement value according to the second reference signal;
receiving measurement information sent by the first UE; wherein the measurement information comprises a first signal strength measurement value and the second signal strength measurement value; and the first signal strength measurement value is generated by the first UE according to a first reference signal sent by a second UE;
acquiring a Signal to Interference plus Noise Ratio (SINR) of the first UE in relation to the second UE according to the measurement information, and generating a scheduling command according to the SINR; wherein the scheduling command is utilized to determine whether each of the first UE and the second UE performs respective communication over the same time-frequency resource; and
sending the scheduling command respectively to the first UE and the second UE, to instruct each of the first UE and the second UE to perform respective communication according to the scheduling command.

7. The method according to claim 6, wherein the measurement information comprises a noise power of the first UE, and acquiring the SINR of the first UE in relation to the second UE according to the measurement information comprises:
acquiring the SINR according to the first signal strength measurement value, the second signal strength measurement value and the noise power which are indicated by the measurement information.

8. The method according to claim 7, wherein the noise power is acquired according to at least one of,

receiving the noise power sent by the first UE; or
acquiring communication environment information of the first UE, and acquiring the noise power.

9. The method according to claim 6, wherein generating the scheduling command according to the SINR comprises:

acquiring a threshold value of the SINR configured according to a communication requirement of the first UE; and
generating the scheduling command according to a relationship between the SINR and the threshold value.

10. The method according to claim 9, wherein generating the scheduling command according to the relationship between the SINR and the threshold value comprises one of:

generating the scheduling command and determining that each of the first UE and the second UE performs respective communication over the same time-frequency resource, in response to the SINR being greater than or equal to the threshold value; or
generating the scheduling command and determining that each of the first UE and the second UE performs respective communication over different time-frequency resources, in response to the SINR being lower than the threshold value.

11. The method according to claim 9, wherein generating the scheduling command according to the relationship between the SINR and the threshold value comprises:

establishing a first inter-user interference table according to the relationship between the SINR and the threshold value; and
generating the scheduling command based on the first inter-user interference table.

12. The method according to claim 11, wherein the second UE is in communicative connection with a second BS equipment, and after establishing the first inter-user interference table according to the relationship between the SINR and the threshold value, the method further comprises:

sending the first inter-user interference table to the second BS equipment, such that the second BS equipment performs communication scheduling according to the first inter-user interference table; and
receiving a second inter-user interference table sent by the second BS equipment, and updating the first inter-user interference table according to the second inter-user interference table; wherein the second inter-user interference table is acquired by the second BS equipment according to the corresponding first UE and second UE.

13. The method according to claim 10, wherein a plurality of first UEs and/or a plurality of second UEs are provided, and the first UE is one of the plurality of first UEs, and the second UE is one of the plurality of second UEs; and generating the scheduling command and determining that each of the first UE and the second UE performs respective communicative over the same time-frequency resource, in response to the SINR being greater than or equal to the threshold value comprises:

successively determining that one first UE of the plurality of first UEs and one second UE of the plurality of second UEs are in a pairable relationship in response to the SINR of the one first UE in relation to the one second UE being greater than or equal to the threshold value, to identify a plurality pairs of first UE and second UE satisfying the pairable relationship;
acquiring an equipment priority according to at least one of, pairing objects, number of pairings, or the relationship between the SINR and the threshold value among the plurality pairs of the first UEs and the second UEs satisfying the pairable relationship; and
generating a scheduling command according to the equipment priority to schedule each UE corresponding pair of first UE and second UE satisfying the pairable relationship to perform respective communication over the same time-frequency resource.

14. The method according to claim 6, wherein generating the scheduling command according to the SINR comprises:

generating the scheduling command according to the SINR of each first UE of a plurality of first UEs in a first spatial division group in relation with the second UE, in response to a provision of the plurality of first UEs belonging to the first spatial division group, wherein the first UE is one of the plurality of first UEs; or
generating the scheduling command according to the SINR of each second UE of a plurality of second UEs in a second spatial division group in relation with the first UE, in response to a provision of the plurality of second UEs belonging to the second spatial division group, wherein the second UE is one of the plurality of second UEs.

15. A method for communication, applied to a second User Equipment (UE), the method comprising:

sending a first reference signal to a first UE, to instruct the first UE to acquire a first signal strength measurement value according to the first reference signal; and
receiving a scheduling command sent by a first Base Station (BS) equipment, and performing communication according to the scheduling command;
wherein, the scheduling command is acquired by the first BS equipment according to the Signal to Interference plus Noise Ratio (SINR) of the first UE in relation to the second UE; the scheduling command is utilized for determining whether each of the first UE and the second UE performs respective communication over the same time-frequency resource; the SINR is acquired by the first BS equipment according to the measurement information that comprises the first signal strength measurement value and a second signal strength measurement value; and the second signal strength measurement value is acquired by the first UE according to a second reference signal sent by the first BS equipment.

16. The method according to claim 15, wherein performing the communication according to the scheduling command comprises at least one of,

performing the communication over the same time-frequency resource as that of the first UE according to the scheduling command, in response to the SINR being greater than or equal to a threshold value; or
performing the communication over a different time-frequency resource from that of the first UE according to the scheduling command, in response to the SINR being lower than the threshold value.

17. A network device, comprising a memory, a processor and a computer program stored in the memory and executable by the processor which, when executed by the processor causes the processor to carry out the method of any one of claims 1 to 16.

18. A computer-readable storage medium storing a computer program which, when executed by a processor, causes the processor to carry out the method as claimed in any one of claims 1 to 16.

Receive a first reference signal sent by a second UE, and acquire a first signal strength measurement value according to the first reference signal ⟩S110

Receive a second reference signal sent by a first base station equipment, and acquire a second signal strength measurement value according to the second reference signal ⟩S120

Acquire measurement information according to the first signal strength measurement value and the second signal strength measurement value, and the measurement information is sent to the first base station equipment, such that the first base station equipment obtains a SINR through the measurement information, and generates a scheduling command according to the SINR; the scheduling command is utilized to determine whether the each of first UE and the second UE performs respective communicate over the same time-frequency resource ⟩S130

Receive the scheduling command sent by the first base station equipment, and Perform communication according to the scheduling command ⟩S140

FIG. 1

First BS equipment

Uplink channel

Downlink channel

Interference

User 1

User 2

FIG. 2

Acquire a noise power, and acquire measurement information according to the first signal strength measurement value, the second signal strength measurement value, and the noise power ~ S210

Acquire communication environment information, and acquire the measurement information according to the first signal strength measurement value, the second signal strength measurement value, and the communication environment information ~ S220

FIG. 3

Receive a plurality of first reference signals sent by the plurality of second UEs in the second spatial division group

S310

Acquire a first signal strength measurement value by combining the plurality of first reference signals of the second spatial division group

S320

FIG. 4

First BS equipment

Uplink channel

User 1

Downlink channel

User 4

User 7

User 2 User 3

Interference

User 5

User 6

FIG. 5

FIG. 6

Perform communication over the same time-frequency resource as that of the second UE according to the scheduling command, in response to the SINR being greater than or equal to a threshold value ⟶ S410

Perform communication over a different time-frequency resource than that of the second UE according to the scheduling command, in response to the SINR being lower than the threshold value ⟶ S420

FIG. 7

Send a second reference signal to a first UE, such that the first UE acquires a second signal strength measurement value according to the second reference signal — S510

Receive measurement information sent by a first UE; the measurement information includes a first signal strength measurement value and a second signal strength measurement value; and the first signal strength measurement value is obtained by the first UE according to a first reference signal from a second UE — S520

Acquire SINRs of the first UE in relation to the second UE according to the measurement information, and generate a scheduling command according to the SINRs, where the scheduling command is utilized to determine whether each of the first UE and the second UE can perform respective communication over the same time-frequency resource — S530

Send the scheduling command respectively to the first UE and the second UE, such that each of the first UE and the second UE perform respective communication according to the scheduling command — S540

FIG. 8

Receive a noise power sent by the first UE    S610

Alternatively, acquire the communication environment information of the first UE, and acquire the noise power    S620

FIG. 9

Acquire a threshold value of the SINR configured according to the communication requirements of the first UE    S710

Generate a scheduling command according to the relationship between the SINR and the threshold value    S720

FIG. 10

Generate the scheduling command and perform a determination that each of the first UE and the second UE performs respective communication over the same time-frequency resource, in response to the SINR being greater than or equal to the threshold value $\sim$ S810

Generate the scheduling command and perform a determination that each of the first UE and the second UE performs respective communication over different time-frequency resources, in response to the SINR being lower than the threshold value $\sim$ S820

FIG. 11

Establish a first inter-user interference table according to the relationship between the SINR and the threshold value $\sim$ S910

Generate a scheduling command based on the first inter-user interference table $\sim$ S920

FIG. 12

Send a first inter-user interference table to the second base station equipment, such that the second base station equipment performs communication scheduling according to the first inter-user interference table  S1010

Receive a second inter-user interference table sent by the second BS equipment, and update the first inter-user interference table according to the second inter-user interference table, where the second inter-user interference list is obtained by the second BS equipment according to the corresponding first UE and second UE  S1020

FIG. 13

Determined that the first UE(s) and the second UE(s) are pairable, in response to the SINR being greater than or equal to the threshold value  S1110

Acquire the equipment priority according to at least one of the pairable objects, the number of pairings, the relationship of the SINR and the threshold value, among a plurality of first UEs and second UEs that meet the pairable relationship  S1120

Generate a scheduling command according to the equipment priority to schedule the corresponding first UE and second UE to perform respective communication over the same time-frequency resource  S1130

FIG. 14

First BS equipment

Uplink channel

Downlink channel

User 1

User 4

User 2

User 3

Interference

User 5

## FIG. 15

Generate a scheduling command according to the SINR of each first UE of a plurality of UEs in a first spatial division group in relation with a second UE, when the plurality of first UEs are provided, and the plurality of first UEs belong to the first spatial division group

S1210

Generate a scheduling command according to the SINR of a first UE and each of a plurality of second UEs in a second spatial division group, when the plurality of second UEs are provided, and the plurality of second UEs belong to the second spatial division group

S1220

## FIG. 16

Send a first reference signal to a first UE, such that the first UE acquires a first signal strength measurement value according to the fist reference signal ⟶ S1310

Receive the scheduling command sent by the first base station equipment, and perform communication according to the scheduling command ⟶ S1320

FIG. 17

Perform communication over the same time-frequency resource as that of the first UE according to the scheduling command, in response to the SINR being greater than or equal to a threshold value ⟶ S1410

Perform communication over a different time-frequency resource from that of the first UE according to the scheduling command, in response to the SINR being lower than the threshold value ⟶ S1420

FIG. 18

100

Network Device

Processor ⌐ 101

Memory

⌐ 102

FIG. 19

<table>
<tr><td colspan="2"><b>INTERNATIONAL SEARCH REPORT</b></td><td colspan="2">International application No.<br><br><b>PCT/CN2022/142517</b></td></tr>
<tr><td colspan="4"><b>A. CLASSIFICATION OF SUBJECT MATTER</b><br>H04W 72/12(2023.01)i;H04W 72/04(2023.01)i;H04L 5/00(2006.01)i<br><br>According to International Patent Classification (IPC) or to both national classification and IPC</td></tr>
<tr><td colspan="4"><b>B. FIELDS SEARCHED</b></td></tr>
<tr><td colspan="4">Minimum documentation searched (classification system followed by classification symbols)<br>IPC: H04W H04L</td></tr>
<tr><td colspan="4">Documentation searched other than minimum documentation to the extent that such documents are included in the fields searched<br><br></td></tr>
<tr><td colspan="4">Electronic data base consulted during the international search (name of data base and, where practicable, search terms used)<br>CNABS; CNTXT; CNKI; VEN; WOTXT; USTXT; EPTXT; 3GPP: 同频同时全双工, 同一, 相同, 时频, 资源, 调度, 参考信号, 信号强度, 信号质量, 测量, 信干噪比, 干扰, 空分, Co-frequency Co-time Full Duplex, CCFD, resource, RS, SRS, reference signal, RSRQ, RSRP, SINR, measure, interference, multi-user</td></tr>
<tr><td colspan="4"><b>C. DOCUMENTS CONSIDERED TO BE RELEVANT</b></td></tr>
<tr><td>Category*</td><td colspan="2">Citation of document, with indication, where appropriate, of the relevant passages</td><td>Relevant to claim No.</td></tr>
<tr><td>X</td><td colspan="2">CN 112383367 A (HANGZHOU DIANZI UNIVERSITY SHANGYU SCIENCE AND ENGINEERING RESEARCH INSTITUTE CO., LTD.) 19 February 2021 (2021-02-19)<br>description, paragraphs [0012]-[0145]</td><td>1-18</td></tr>
<tr><td>A</td><td colspan="2">CN 111835442 A (BEIJING SAMSUNG TELECOM R&D CENTER et al.) 27 October 2020 (2020-10-27)<br>entire document</td><td>1-18</td></tr>
<tr><td>A</td><td colspan="2">CN 112867031 A (HUAWEI TECHNOLOGIES CO., LTD.) 28 May 2021 (2021-05-28)<br>entire document</td><td>1-18</td></tr>
<tr><td>A</td><td colspan="2">CN 112235095 A (COMBA COMMUNICATION SYSTEM (CHINA) CO., LTD.) 15 January 2021 (2021-01-15)<br>entire document</td><td>1-18</td></tr>
<tr><td>A</td><td colspan="2">WO 2018036305 A1 (HUAWEI TECHNOGOLY CO., LTD.) 01 March 2018 (2018-03-01)<br>entire document</td><td>1-18</td></tr>
<tr><td colspan="2">☐ Further documents are listed in the continuation of Box C.</td><td colspan="2">☑ See patent family annex.</td></tr>
<tr><td colspan="2">*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed</td><td colspan="2">"T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family</td></tr>
<tr><td colspan="2">Date of the actual completion of the international search<br><br><b>02 March 2023</b></td><td colspan="2">Date of mailing of the international search report<br><br><b>16 March 2023</b></td></tr>
<tr><td colspan="2">Name and mailing address of the ISA/CN<br><br><b>China National Intellectual Property Administration (ISA/CN)</b><br><b>China No. 6, Xitucheng Road, Jimenqiao, Haidian District, Beijing 100088</b><br><br>Facsimile No. <b>(86-10)62019451</b></td><td colspan="2">Authorized officer<br><br><br><br><br>Telephone No.</td></tr>
</table>

Form PCT/ISA/210 (second sheet) (July 2022)

## INTERNATIONAL SEARCH REPORT
### Information on patent family members

International application No.

**PCT/CN2022/142517**

| Patent document cited in search report | | | Publication date (day/month/year) | Patent family member(s) | Publication date (day/month/year) |
|---|---|---|---|---|---|
| CN | 112383367 | A | 19 February 2021 | None | |
| CN | 111835442 | A | 27 October 2020 | None | |
| CN | 112867031 | A | 28 May 2021 | None | |
| CN | 112235095 | A | 15 January 2021 | None | |
| WO | 2018036305 | A1 | 01 March 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111623340